# EUROPEAN PATENT SPECIFICATION

(11) **EP 1 318 185 B1**
(45) Date of publication and mention of the grant of the patent: **16.02.2005**
(21) Application number: 02025130.2
(22) Date of filing: 09.11.2002
(51) Int. Cl.: C09K 19/32

(54) **Reactive mesogenic azulenes**
Reaktive mesogene Azulene
Azulènes mésogéniques réactifs

(30) Priority: 10.12.2001 EP 01129217
(43) Date of publication of application: 11.06.2003
(73) Proprietor: MERCK PATENT GmbH, 64293 Darmstadt (DE)
(72) Inventor: Farrand, Louise, Blandford Forum, Dorset, DT11 9ED (GB); Findlater, Michael, Glasgow, G69 7QG (GB); Giles, Mark, Southampton, SO15 2LE (GB); Heeney, Martin, Southampton, SO14 6TQ (GB); Tierney, Steven, Southamton SO15 7QW (GB); Thompson, Marcus, Fordingbridge, Hampshire, SP6 1RR (GB); Shkunov, Maxim, Southampton, SO16 6SX (GB); Sparrowe, David, Bournemouth, Dorset, BH6 5EJ (GB); McCulloch, Iain, Hampshire, SO20 6PE (GB)

(56) References cited:
- EP-A- 0 187 015
- EP-A- 1 256 602
- WO-A-97/00600
- US-A- 4 738 908
- PATENT ABSTRACTS OF JAPAN vol. 014, no. 250 (C-0723), 29 May 1990 (1990-05-29) -& JP 02 069441 A (MITSUBISHI KASEI CORP), 8 March 1990 (1990-03-08)
- PATENT ABSTRACTS OF JAPAN vol. 014, no. 250 (C-0723), 29 May 1990 (1990-05-29) -& JP 02 069437 A (MITSUBISHI KASEI CORP), 8 March 1990 (1990-03-08)
- PATENT ABSTRACTS OF JAPAN vol. 015, no. 324 (C-0859), 19 August 1991 (1991-08-19) -& JP 03 122189 A (MITSUBISHI KASEI CORP), 24 May 1991 (1991-05-24)
- ESTDALE S E ET AL: "THE AZULENE RING AS A STRUCTURAL ELEMENT IN LIQUID CRYSTALS" JOURNAL OF MATERIALS CHEMISTRY, THE ROYAL SOCIETY OF CHEMISTRY, CAMBRIDGE, GB, vol. 7, no. 3, 1 March 1997 (1997-03-01), pages 391-401, XP000693112 ISSN: 0959-9428
- PATENT ABSTRACTS OF JAPAN vol. 014, no. 250 (C-0723), 29 May 1990 (1990-05-29) -& JP 02 069439 A (MITSUBISHI KASEI CORP), 8 March 1990 (1990-03-08)
- PATENT ABSTRACTS OF JAPAN vol. 014, no. 250 (C-0723), 29 May 1990 (1990-05-29) -& JP 02 069438 A (MITSUBISHI KASEI CORP), 8 March 1990 (1990-03-08)
- PATENT ABSTRACTS OF JAPAN vol. 009, no. 247 (C-307), 3 October 1985 (1985-10-03) -& JP 60 104180 A (CANON KK), 8 June 1985 (1985-06-08)
- WADA E. ET AL: 'Synthesis and Polymerization of Acrylates Containing Azulene Structure' J.POLYM.SCI.,POLYM.CHEM.ED. vol. 16, no. 8, 1978, pages 2085 - 2087

## Description

### Field of Invention

The invention relates to new reactive mesogenic azulene derivatives. The invention further relates to their use as semiconductors or charge transport materials, in optical, electro-optical or electronic devices like for example liquid crystal displays, optical films, organic field effect transistors (FET or OFET) for thin film transistor liquid crystal displays and integrated circuit devices such as RFID tags, electroluminescent devices in flat panel displays, and in photovoltaic and sensor devices. The invention further relates to a field effect transistor, light emitting device or ID tag comprising the reactive mesogenic azulenes.

### Background and Prior Art

Organic materials have recently shown promise as the active layer in organic based thin film transistors and organic field effect transistors [see H. E. Katz, Z. Bao and S. L. Gilat, *Acc. Chem. Res*., 2001, **34**, 5, 359]. Such devices have potential applications in smart cards, security tags and the switching element in flat panel displays. Organic materials are envisaged to have substantial cost advantages over their silicon analogues if they can be deposited from solution, as this enables a fast, large-area fabrication route.

The performance of the device is principally based upon the charge carrier mobility of the semi-conducting material and the current on/off ratio, so the ideal semiconductor should have a low conductivity in the off state, combined with a high charge carrier mobility (> 1 x 10⁻³ cm² V⁻¹ s⁻¹). In addition, it is important that the semi-conducting material is relatively stable to oxidation i.e. it has a high ionisation potential, as oxidation leads to reduced device performance.

A known compound which has been shown to be an effective p-type semiconductor for OFETs is pentacene [see S. F. Nelson, Y. Y. Lin, D. J. Gundlach and T. N. Jackson, *Appl. Phys. Lett*., 1998, **72,** 1854]. When deposited as a thin film by vacuum deposition, it was shown to have carrier mobilities in excess of 1 cm² V⁻¹ s⁻¹ with very high current on/off ratios greater than 10⁶. However, vacuum deposition is an expensive processing technique that is unsuitable for the fabrication of large-area films.

Regular poly(3-hexylthiophene) has been reported with charge carrier mobility between 1 x 10⁻⁵ and 4.5 x 10⁻² cm² V⁻¹ s⁻¹, but with a rather low current on/off ratio between 10 and 10³ [see Z. Bao et al., *Appl. Phys. Lett.* 1997, **78,** 2184]. In general, poly(3-alkylthiophenes) show improved solubility and are able to be solution processed to fabricate large area films. However, poly(3-alkylthiophenes) have relatively low ionisation potentials and are susceptible to doping in air [see H. Sirringhaus et al., *Adv. Solid State Phys.* 1999, **39,** 101].

It was an aim of the present invention to provide new organic materials for use as semiconductors or charge transport materials, which are easy to synthesise, have high charge mobility and good processability. The materials should be easily processable to form thin and large-area films for use in semiconductor devices. Other aims of the invention are immediately evident to those skilled in the art from the following description.

It was found that the above aims can be achieved by providing reactive mesogenic azulene compounds, also referred to as reactive azulene mesogens, according to the present invention as described below. They consist of a central mesogenic core comprising one or more azulene groups, and optionally comprising further unsaturated organic groups that form a conjugated system together with the azulene groups, said mesogenic core being linked, optionally via a spacer group, to one or more polymerisable groups. The reactive mesogenic azulenes can induce or enhance liquid crystal phases or are liquid crystalline themselves. They can be oriented in their mesophase and the polymerisable group can be polymerised or crosslinked in situ to form polymer films with a high degree of order, thus yielding improved semiconductor materials with high stability and high charge carrier mobility.

Grell et al., J. *Korean Phys. Soc.* 2000, **36**(6), 331 suggest a reactive mesogen comprising a conjugated distyrylbenzene core with two reactive acrylate end groups as a model compound for molecular electronics. However, there is no disclosure of reactive mesogens of azulene.

Non-reactive, low molar mass azulene derivatives for use as components of liquid crystal compositions are shown for example in JP-A-02-069437, JP-A-02-069441 and JP-A-03-122189. The synthesis and polymerisation of an acrylate with an azulene group is described in Wada et al., J. Polym. Sci., Polym. Chem. Ed. 1978, 16(8), 2085.

A further aspect of the invention relates to liquid crystal polymers, in particular liquid crystal side chain polymers obtained from the azulene reactive mesogens according to the present invention, which are then further processed e.g. from solution as thin layers for use in semiconductor devices.

### Definition of Terms

The terms 'liquid crystalline or mesogenic material' or 'liquid crystalline or mesogenic compound' means materials or compounds comprising one or more rod-shaped, lath-shaped or disk-shaped mesogenic groups, i.e. groups with the ability to induce liquid crystal phase behaviour. The compounds or materials comprising mesogenic groups do not necessarily have to exhibit a liquid crystal phase themselves. It is also possible that they show liquid crystal phase behaviour only in mixtures with other compounds, or when the mesogenic compounds or materials, or the mixtures thereof, are polymerised.

The term 'reactive group' or 'reactive compound' includes compounds or groups that are capable of participating in a polymerisation reaction, like radicalic or ionic chain polymerisation, polyaddition or polycondensation, as well as compounds or groups that are capable of being grafted for example by condensation or addition to a polymer backbone in a polymer analogous reaction.

The term 'film' includes self-supporting, i.e. free-standing, films that show more or less pronounced mechanical stability and flexibility, as well as coatings or layers on a supporting substrate or between two substrates.

### Summary of the Invention

One object of the invention are reactive mesogenic azulenes, consisting of a central mesogenic core comprising one or more azulene groups, and optionally comprising further unsaturated organic groups that form a conjugated system together with the azulene groups, characterized in that said mesogenic core is linked, optionally via spacer groups, to one or more reactive groups that are capable of participating in a polymerisation reaction or capable of being grafted to a polymer backbone in a polymer analogous reaction, wherein the reactive groups are different from OH and ester groups and the azulene groups are linked to their neighboured groups at the 2- and 6-position.

Another object of the invention is the use of reactive mesogenic azulenes as semiconductors or charge transport materials, in particular in optical, electro-optical or electronic devices, like for example in field effect transistors as components of integrated circuitry, as thin film transistors in flat panel display applications or RFID tags, or in semi-conducting components for organic light emitting diode (OLED) applications such as electroluminescent displays or backlights of flat panel displays, for photovoltaic or sensor devices, or as light-modulating components for liquid crystal displays, optical films or other optical or electrooptical devices.

Another object of the invention is a field effect transistor, for example as a component of integrated circuitry, as a thin film transistor in flat panel display applications, or in an RFID tag, comprising one or more reactive or polymerised mesogenic azulenes according to the present invention.

Another object of the invention is a semi-conducting component, for example in OLED applications like electroluminescent displays or backlights of flat panel displays, in photovoltaic or sensor devices, comprising one or more reactive or polymerised mesogenic azulenes according to the present invention.

### Detailed Description of the Invention

The reactive azulenes according to the present invention provide several advantages over prior art materials
- by adding substituent chains and other groups to the azulene core they can be made more soluble, thus being suitable for spin coating or solution coating techniques, rather than vacuum deposition, to prepare thin films for use e.g. in electronic devices such as transistors,
- they can be made mesogenic or liquid crystalline, thus exhibiting a higher degree of order that leads to particularly high charge carrier mobility, in particular when being aligned in their mesophase into macroscopically ordered orientation
- their macroscopic mesophase properties can be frozen in by in situ polymerisation,
- they combine the properties of a semi-conducting material with those of a mesogenic material to give novel materials with a rigid, planar conjugated core and a flexible chain to increase solubility and to decrease the melting point, which show high charge carrier mobility when being aligned in their mesophase.

The inventive reactive mesogenic azulenes are useful as charge transport semiconductors, in that they have high carrier mobilities. In particular, the introduction of side groups to the conjugated rings bonded to the azulene core improves their solubility and therefore their solution processability. In the compounds according to the present invention, the azulene group is a mesogenic group or part of a mesogenic group. These compounds are therefore particularly useful as semiconductors or charge transport materials, as they can be processed while in the highly ordered mesophase morphology, and readily aligned by conventional techniques in a preferred direction. Both smectic and nematic mesophase ordering allows close packing of molecular pi-electron systems, which maximises intermolecular charge transfer which occurs through a hopping mechanism between adjacent molecules. This ordered, and oriented microstructure can be permanently "frozen-in" by polymerising the mesogens, which can also create a structure with long range order, or "monodomain". Formation of a monodomain also maximises charge transfer by eliminating charge trap sites at grain boundaries, while the polymerisation also improves the mechanical properties of the film. Further, by cross-linking the mesogens, a highly stable structure results, which has an additional advantage of being impervious to subsequent processing solvents during device fabrication, thus allowing a wider range of solvents to be used in deposition of the next layer of the device by solution techniques. In addition, it is often observed that this cross-linking further densifies the film, leading to smaller intermolecular distances and improved charge transport.

It is also possible to co-polymerise azulenes of the present invention with other mesogenic or liquid crystal monomers that are known from prior art, or with other reactive azulenes of the present invention, in order to induce or enhance liquid crystal phase behaviour.

Thus, another object of the invention is a polymerisable liquid crystal mixture comprising one or more reactive azulenes of the present invention, and optionally comprising one or more further reactive compounds, wherein at least one of the reactive azulenes and the further reactive compounds is mesogenic or liquid crystalline.

Particularly preferred are reactive liquid crystal azulenes of the present invention, or liquid crystal mixtures comprising one or more reactive azulenes of the present invention, that exhibit a nematic and/or smectic liquid crystal phase.

Another object of the present invention is an anisotropic polymer film with charge transport properties obtainable from a polymerisable liquid crystal mixture as defined above that is aligned in its liquid crystal phase into macroscopically ordered orientation and polymerised or cross-linked to fix the oriented state.

Another object of the invention is a liquid crystal side chain polymer (SCLCP) obtained from a polymerisable liquid crystal material as defined above by polymerisation or polymeranaloguous reaction. Particularly preferred are SCLCPs obtained from one or more reactive azulenes or from a polymerisable mixture comprising one or more azulenes as described above.

Another object of the invention is an SCLCP obtained from one or more reactive azulenes or from a polymerisable liquid crystal mixture as defined above, by copolymerisation or polymeranaloguous reaction together with one or more additional mesogenic or non-mesogenic comonomers.

Side chain liquid crystal polymers or copolymers (SCLCPs), in which the semiconducting component is located as a pendant group, separated from a flexible backbone by an aliphatic spacer group, offer the possibility to obtain a highly ordered lamellar like morphology. This structure consists of closely packed conjugated aromatic mesogens, in which very close (typically < 4 Å) pi-pi stacking can occur. This stacking allows intermolecular charge transport to occur more easily, leading to high charge carrier mobilities. SCLCPs are advantageous for specific applications as they can be readily synthesized before processing and then e.g. be processed from solution in an organic solvent. If SCLCPs are used in solutions, they can orient spontaneously when coated onto an appropriate surface and when at their mesophase temperature, which can result in large area, highly ordered domains.

Another object of the invention is the use of reactive mesogenic azulenes of the present invention, or liquid crystal mixtures or polymer films obtained thereof, as light-modulating component in liquid crystal displays, which may for example be switchable between two different states by an electric field, for components of liquid crystal displays, in particular optical retardation or compensation films, alignment layers or polarisers, or in other optical or electrooptical devices.

Another object of the invention is a liquid crystal display, component of a liquid crystal display, in particular an optical retardation or compensation films, alignment layer or polariser, or an other optical or electrooptical device comprising reactive azulenes according to the present invention, or liquid crystal mixtures or polymer films obtained thereof.

The azulene groups in the inventive compounds are linked to their neighbouring groups at the 2- and 6-position.

Especially preferred are compounds selected of formula I

P-Sp-T-R¹ I

wherein
- P: is a polymerisable or reactive group,
- Sp: is a spacer group or a single bond,
- R¹: is H, halogen, CN, NO₂, an aliphatic, alicyclic or aromatic group with up to 40 C atoms that optionally comprise one or more hetero atoms and one or more fused rings, or P-Sp-, and
- T: is a mesogenic group comprising one or more azulene groups that are optionally substituted and optionally comprise fused azulene groups, with the proviso that azulene groups linked to their neighboured groups at the 1- and 3-position are excluded.

R¹ in formula I is preferably H, F, Cl or straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -CH=CH- or -C≡C- in such a manner that O and/or S atoms are not linked directly to one another, or an aromatic or heteroaromatic group.

Particularly preferably R¹ is optionally fluorinated alkyl or alkoxy with 1 to 15 C atoms.

Further preferred are compounds of formula I wherein R¹ is P-Sp.

T in formula I preferably comprises 1 or 2 azulene groups.

Particularly preferably T is selected of formula II

-Z¹-(A¹-Z²)ₘ-(T¹-Z³)ₙ-(A²-Z⁴)ₒ- II

wherein
- A¹ and A²: are independently of each other an aromatic, heteroaromatic, group with up to 18 C atoms which is unsubstituted, mono- or polysubstituted with R¹, and A¹ may also denote T¹,
- Z¹ to Z⁴: are independently of each other -O-, -S-, -CO-, -COO-, -OCO-, -O-COO-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CX¹=CX²-, -C≡C-, -CH=CH- COO-, -OCO-CH=CH- or a single bond,
- X¹ and X²: are independently of each other H, F, Cl or CN,
- T¹: is a group consisting of 1, 2, 3, or 4 azulene units which are optionally substituted by R²,
- R²: is H, halogen, CN, NO₂, straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -CH=CH- or -C≡C- in such a manner that O and/or S atoms are not linked directly to one another, or denotes an aromatic or heteroaromatic group or P-Sp,
- R⁰ and R⁰⁰: are independently of each other H or alkyl with 1 to 12 C-atoms,
- m and o: are independently of each other 0, 1, 2 or 3, and
- n: is 1, 2 or 3

Particularly preferred groups T are those wherein Z¹, A¹, Z², T¹, Z³, A² and Z⁴ form a conjugated system. Therein A¹ and A² are preferably arylene or heteroarylene and Z¹, Z², Z³ and Z⁴ are preferably a single bond or a conjugated link such as -CX¹=CX²- or -C≡C-.

Further preferred groups T are those wherein m and o are 0, further those wherein m and o are 1 or 2.

Further preferred groups T are those wherein T¹ is azulene that is optionally substituted with R² as defined in formula II, furthermore those wherein n is 1 or 2 and Z² is a single bond or a conjugated link such as -CX¹=CX²- or -C≡C-.

Particularly preferred groups T are those of the following formulae

-Z¹-T¹-Z³- II1

-Z¹-A¹-Z²-T¹-Z³- II2

-Z¹-T¹-Z³-T¹-Z³- II3

-Z¹-A¹-Z²-T¹-Z³-A²-Z⁴- II4

-Z¹-A¹-Z²-A¹-Z²-T¹-Z³- II5

-Z¹-A¹-Z²-T¹-Z³-T¹-Z³- II6

-Z¹-T¹-Z²-A¹-Z²-T¹-Z³- II7

-Z¹-A¹-Z²-A¹-Z²-T¹-Z³-A²-Z⁴- II8

-Z¹-A¹-Z²-A¹-Z²-A¹-Z²-T²-Z³- II9

-Z¹-A¹-Z²-A¹-Z²-T¹-Z³-T²-Z³- II10

-Z¹-A¹-Z²-T¹-Z²-A¹-Z²-T²-Z³- II11

-Z¹-A¹-Z²-T¹-Z³-T¹-Z³-A²-Z⁴- II12

-Z¹-T¹-Z²-A¹-Z²-A¹-Z²-T²-Z³- II13

-Z¹-A¹-Z²-T¹-Z³-T¹-Z³-T¹-Z³- II14

-Z¹-T¹-Z²-A¹-Z²-T¹-Z³-T¹-Z³- II15

-Z¹-A¹-Z²-A¹-Z²-A¹-Z²-A¹-Z²-T¹-Z³- II16

-Z¹-A¹-Z²-A¹-Z²-A¹-Z²-T¹-Z³-A¹-Z⁴- II17

-Z¹-A¹-Z²-A¹-Z²-T¹-Z³-A²-Z⁴-A²-Z⁴- II18

-Z¹-A¹-Z²-A¹-Z²-A¹-Z²-T¹-Z³-T¹-Z³- II19

-Z¹-A¹-Z²-A¹-Z²-T¹-Z²-A¹-Z²-T¹-Z³- II20

-Z¹-A¹-Z²-T¹-Z²-A¹-Z²-A¹-Z²-T¹-Z³- II21

-Z¹-A¹-Z²-A¹-Z²-T¹-Z³-T¹-Z³-A²-Z⁴- II22

-Z¹-A¹-Z²-T¹-Z²-A¹-Z²-T¹-Z³-A²-Z⁴- II23

-Z¹-T¹-Z²-A¹-Z²-A¹-Z²-A¹-Z²-T¹-Z³- II24

-Z¹-A¹-Z²-A¹-Z²-T¹-Z³-T¹-Z³-T¹-Z³- II25

-Z¹-A¹-Z²-T¹-Z²-A¹-Z²-T¹-Z³-T¹-Z³- II26

-Z¹-A¹-Z²-T¹-Z²-T¹-Z²-A¹-Z²-T¹-Z³- II27

-Z¹-A¹-Z²-T¹-Z³-T¹-Z³-T¹-Z³-A²-Z⁴- II28

-Z¹-T¹-Z²-A¹-Z²-T¹-Z²-A¹-Z²-T¹-Z³- II29

-Z¹-T¹-Z²-A¹-Z²-A¹-Z²-T¹-Z³-T¹-Z³- II30

wherein Z¹, Z², Z³, Z⁴, A¹, A² and T¹ have in each case independently one of the meanings of formula II.

T¹ is preferably 2,6-azulene, furthermore [2,6']-bisazulene-6,2'-diyl, [2,2']-bisazulene-6,6'-diyl or [6,6']-bisazulene-2,2'-diyl, all of which are optionally mono- or polysubstituted by R² as defined in formula II.

T¹ is preferably selected from the following subformulae 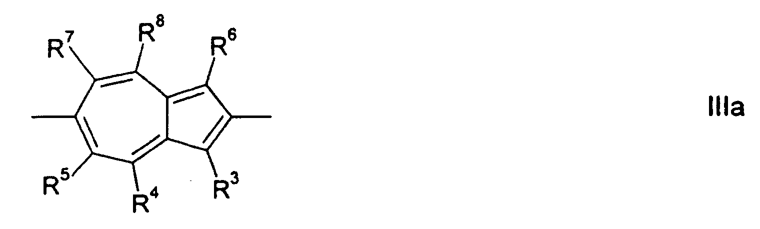 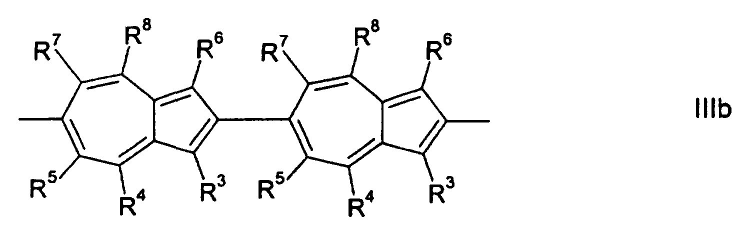 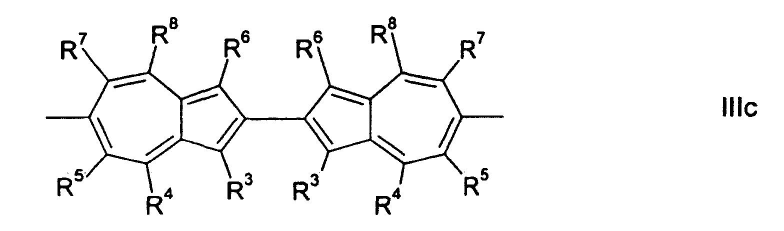 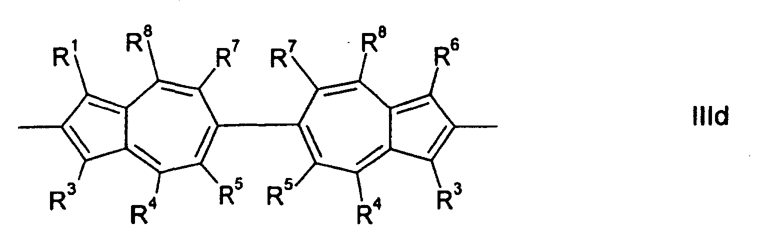 wherein R³ to R⁸ have independently of each other one of the meanings of R¹ in formula II, and are preferably halogen, methyl, ethyl, propyl, CO₂Me, CO₂Et, CN, COCH₃ or CHO.

A¹ and A² are preferably selected from 1,4-phenylene, 1,4-cyclohexa-1,3-diene, 1,4-cyclohexenylene in which, in addition, one or more CH groups are optionally replaced by N and one or two non-adjacent CH₂ groups are optioanlly replaced by O and/or S, thiophene-2,5-diyl, thienothiophene-2,5-diyl, dithienothiophene-2,6-diyl, 1,4-bicyclo-(2,2,2)-octylene, naphthalene-2,6-diyl, furan 2,5 diyl, and indane-2,5-diyl, wherein these groups are unsubstituted, mono-or polysubstituted by L, with L being halogen, CN, SCN, NO₂, SF₅ or an alkyl, alkoxy, alkylcarbonyl or alkoxycarbonyl group with 1 to 4 C atoms, wherein one or more H atoms are optionally substituted with F or Cl.

A¹ and A² are particularly preferably 1,4-phenylene that is substituted with 1, 2 or 3 groups L as defined above, or thiophene-2,5-diyl, all of which are optionally substituted with one or more groups L as defined above.

Z¹⁻⁴ are preferably selected from -O-. -S-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CX¹=CX²-, -C≡C- and a single bond, in particular from -CH=N-, -N=CH-, -N=N-, -CH=CR⁰-, -CX¹=CX²-, -C≡C- and a single bond.

Particularly preferred are the following compounds 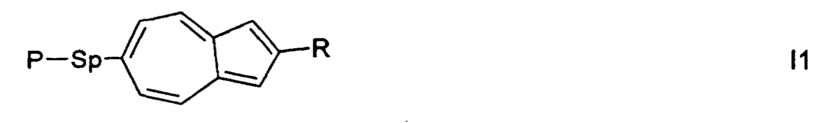 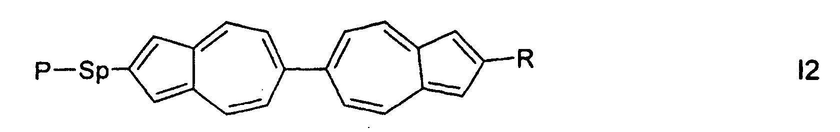 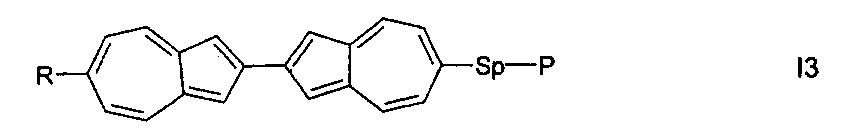 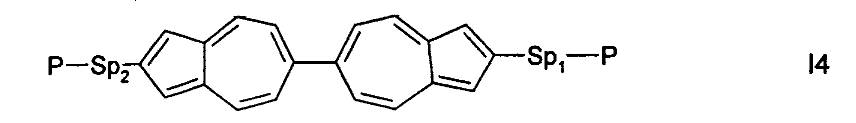 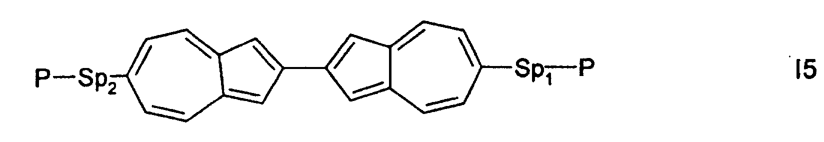 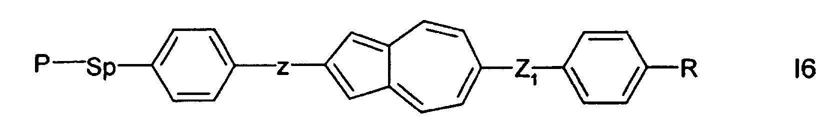 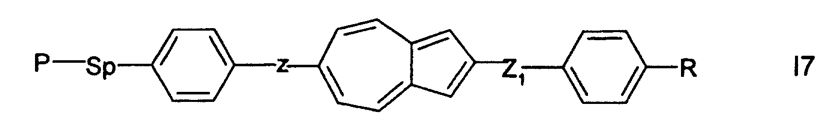 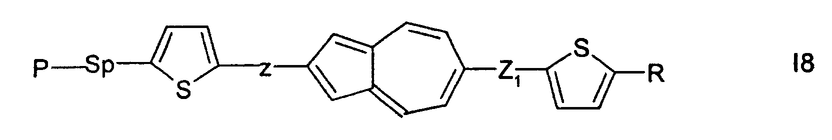 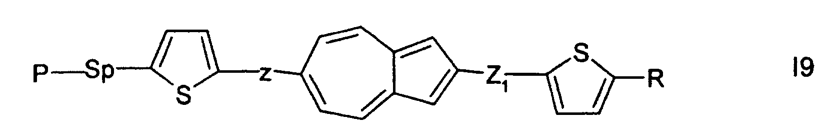 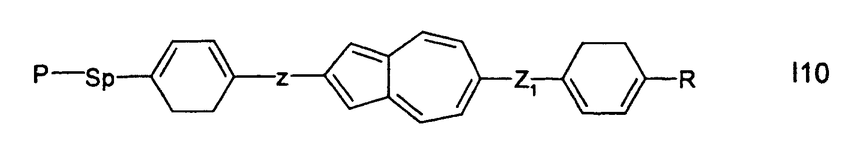 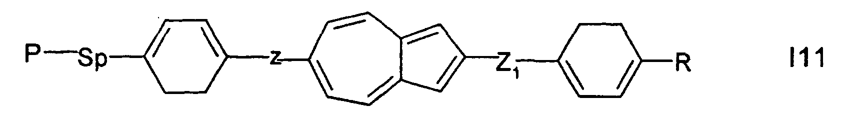 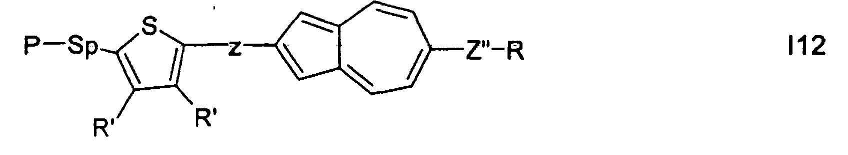 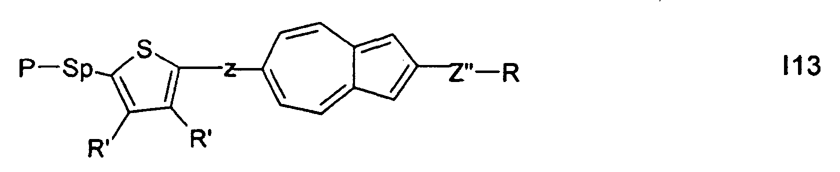 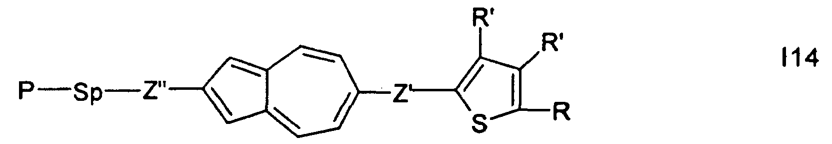 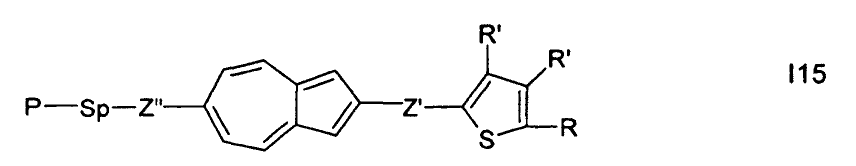 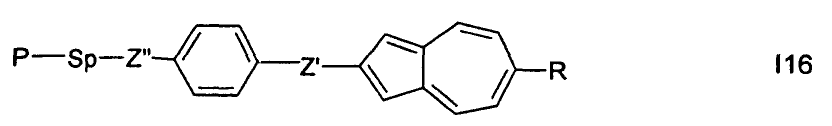 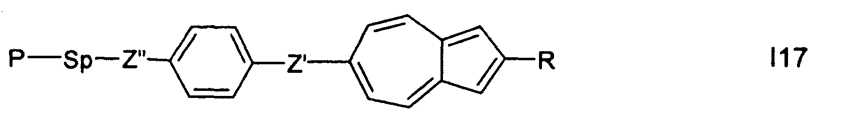 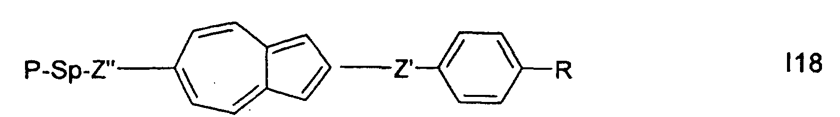 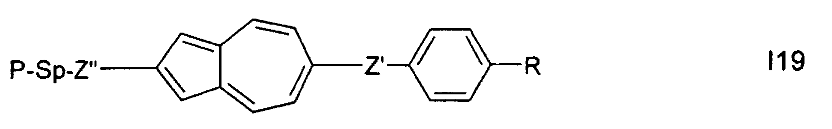 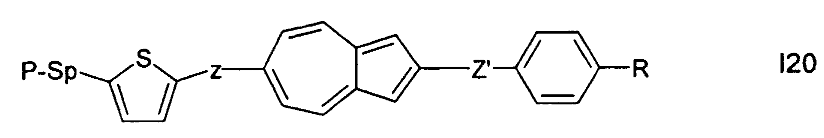 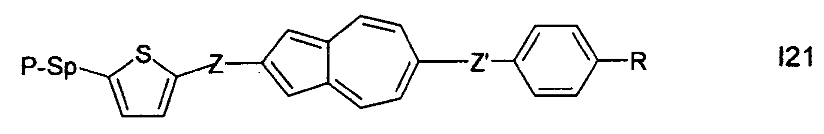 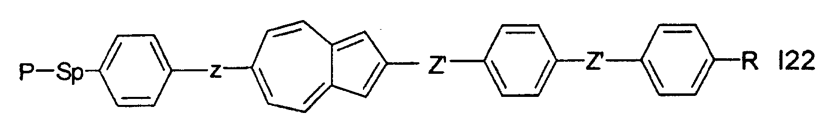 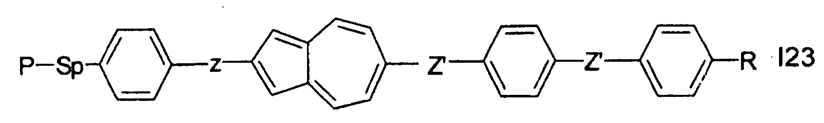 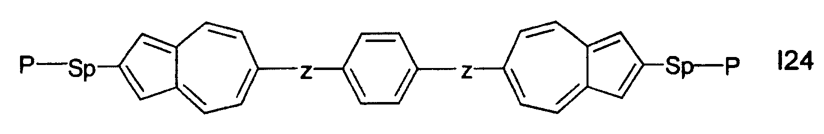 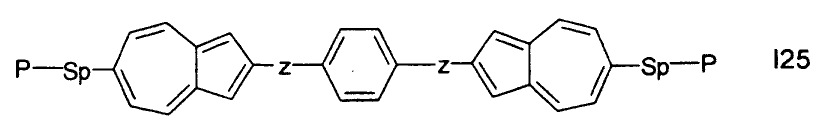 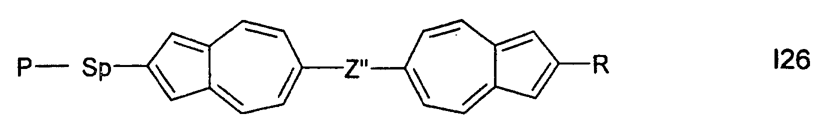 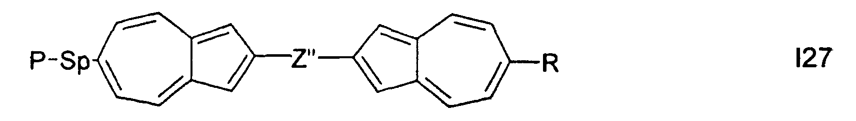 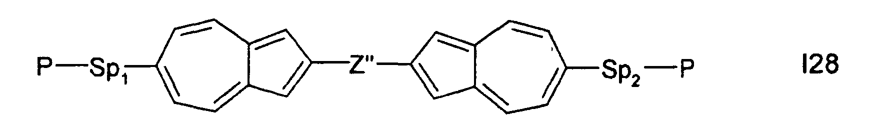 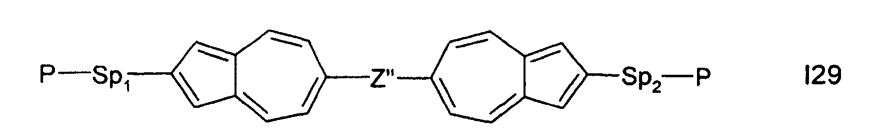 wherein P, Sp and n have the meanings of formula I,
- Sp¹ and Sp²: are different groups Sp as defined in formula I,
- Z and Z': have independently of each other one of the meanings of Z¹ in formula II, and are preferably -CH=CH-, -CH=CF-, -CF=CH-, CH=CCI-, -CCI=CH-, -CF=CF-, -CCI=CCI-, -C≡C- or a single bond,
- Z": has one of the meanings of Z¹ in formula II, and is preferably -CH=CH-, -CH=CF-, -CF=CH-, CH=CCI-, -CCl=CH-, -CF=CF-, -CCI=CCI- or -C≡C-,
- R: has in each case independently one of the meanings of R¹ of formula I, and is preferably halogen, an optionally fluorinated alkyl groups with 1 to 15 C atoms or P-Sp-,
- R': has in each case independently one of the meanings of R² in formula II, and is preferably halogen, an optionally fluorinated alkyl group with 1 to 15 C atoms or P-Sp-,
and wherein the azulene group is optionally mono-or polysubstituted by R² as defined in formula II.

Further preferred are compounds of the preferred formulae 16 to 129, wherein the azulene-2,6-diyl groups are replaced by [2,6']-bisazulene-6,2'-diyl, [2,2']-bisazulene-6,6'-diyl or [6,6']-bisazulene-2,2'-diyl, all of which are optionally mono- or polysubstituted by R² as defined in formula II.

In the foregoing and the following, arylene and heteroarylene preferably denote a bivalent mono-, bi- or tricyclic aromatic or heteroaromatic group with up to 15 C atoms that may also comprise fused rings and is optionally substituted with one or more groups selected from H, halogen, CN, NO₂, straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -CH=CH- or -C≡C- in such a manner that O and/or S atoms are not linked directly to one another, and P-Sp as defined in formula I. Very preferred arylene and heteroarylene groups are those having one of the preferred meanings of A¹ as given above and below.

Aryl and heteroaryl preferably denote a mono-, bi- or tricyclic aromatic or heteroaromatic group with up to 25 C atoms that may also comprise fused rings and is optionally substituted with one or more groups selected from H, halogen, CN, NO₂, straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -CH=CH- or -C≡C- in such a manner that O and/or S atoms are not linked directly to one another, and P-Sp as defined in formula I.

Especially preferred aryl and heteroaryl groups are phenyl in which, in addition, one or more CH groups are optionally replaced by N, naphthalene, thiophene, thienothiophene, dithienothiophene, alkyl fluorene and oxazole, all of which can be unsubstituted, mono- or polysubstituted with L, wherein L is halogen or an alkyl, alkoxy, alkylcarbonyl or alkoxycarbonyl group with 1 to 12 C atoms, wherein one or more H atoms are optionally replaced by F or Cl.

Further preferred aryl and-heteroaryl groups include five-membered heterocyclics like oxazole or isoxazole, N-substituted imidazole or pyrazole, thiazole or isothiazole, oxadiazole, N-substituted triazole, six-membered heterocyclics like pyridine, pyridazine, pyrimidine, pyrazine, triazine and tetrazine, heterocyclics with fused rings like benzoxazole, benzothiazole, benzimidazole, quinoline, isoquinoline, cinnoline, quinazoline, quinoxaline, phthalazine, benzothiadiazole, benzotriazole, benzotriazine, phenazine, phenanthridine, acridine, or condensed polycyclics like acenaphthene, phenanthrene, anthracene, fluoranthene, pyrene, perylene, rubrene, chrysene, naphthacene, coronene or triphenylene, all of which can be unsubstituted, mono- or polysubstituted with L as defined above.

-CX¹=CX²- is preferably -CH=CH-, -CH=CF-, -CF=CH-, -CF=CF-, -CH=C(CN)- or -C(CN)=CH-.

If one of R¹ to R⁸ is an alkyl or alkoxy radical, i.e. where the terminal CH₂ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one CH₂ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

Halogen is preferably F or Cl.

The polymerisable or reactive group P is preferably selected from CH₂=CW¹-COO-, 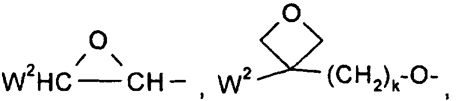 CH₂=CW²-(O)ₖ₁-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, Phe being 1,4-phenylene and k₁ and k₂ being independently of each other 0 or 1.

Especially preferred groups P are CH₂=CH-COO-, CH₂=C(CH₃)-COO-, CH₂=CH-, CH₂=CH-O- and

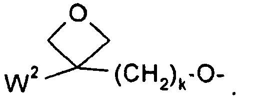

Very preferred are acrylate and oxetane groups. Oxetanes produce less shrinkage upon polymerisation (cross-linking), which results in less stress development within films, leading to higher retention of ordering and fewer defects. Oxetane cross-linking also requires cationic initiator, which unlike free radical initiator is inert to oxygen.

As for the spacer group Sp all groups can be used that are known for this purpose to those skilled in the art. The spacer group Sp is preferably a linear or branched alkylene group having 1 to 20 C atoms, in particular 1 to 12 C atoms, in which, in addition, one or more non-adjacent CH₂ groups are optionally replaced by -O-, -S-, -NH-, -N(CH₃)-, -CO-, -O-CO-, -S-CO-, -O-COO-, -CO-S-, -CO-O-, -CH(halogen)-, -C(halogen)₂, -CH(CN)-, -CH=CH- or -C≡C-, or a siloxane group.

Typical spacer groups are for example -(CH₂)ₚ-, -(CH₂CH₂O)ᵣ-CH₂CH₂-, -CH₂CH₂-S-CH₂CH₂- or -CH₂CH₂-NH-CH₂CH₂- or -(SiR⁰R⁰⁰-O)ₚ-, with p being an integer from 2 to 12, r being an integer from 1 to 3 and R⁰ and R⁰⁰ having the meanings given in formula I.

Preferred spacer groups are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene, 1-methylalkylene, ethenylene, propenylene and butenylene for example.

Further preferred are compounds with one or two groups P-Sp-X wherein Sp and/or X is a single bond.

In case of compounds with two groups P-Sp-X, each of the two polymerisable groups P, the two spacer groups Sp, and the two linkage groups X can be identical or different.

SCLCPs obtained from the inventive compounds or mixtures by polymerisation or copolymerisation have a backbone that is formed by the polymerisable group P in formula I.

The compounds of formula I can be synthesized according to or in analogy to methods that are known to the skilled in the art and are described for example in T. Nozoe, T. Asao and M. Oda, *Bull. Chem. Soc. Jpn.* 1974, 47, 681; D. Balschukat and E. V. Dehmlow, *Chem. Ber.,* 1986, 119, 2272-2288 and T. Morita and K. Takase, *Bull. Chem. Soc. Jpn*., 1982, 55, 1144-1152 and T. Nozoe, S. Seto and S. Matsumura, *Bull. Chem. Soc. Jpn*., 1962, 35, 1990. Furthermore, they can be prepared according to or in analogy to the following reaction schemes.

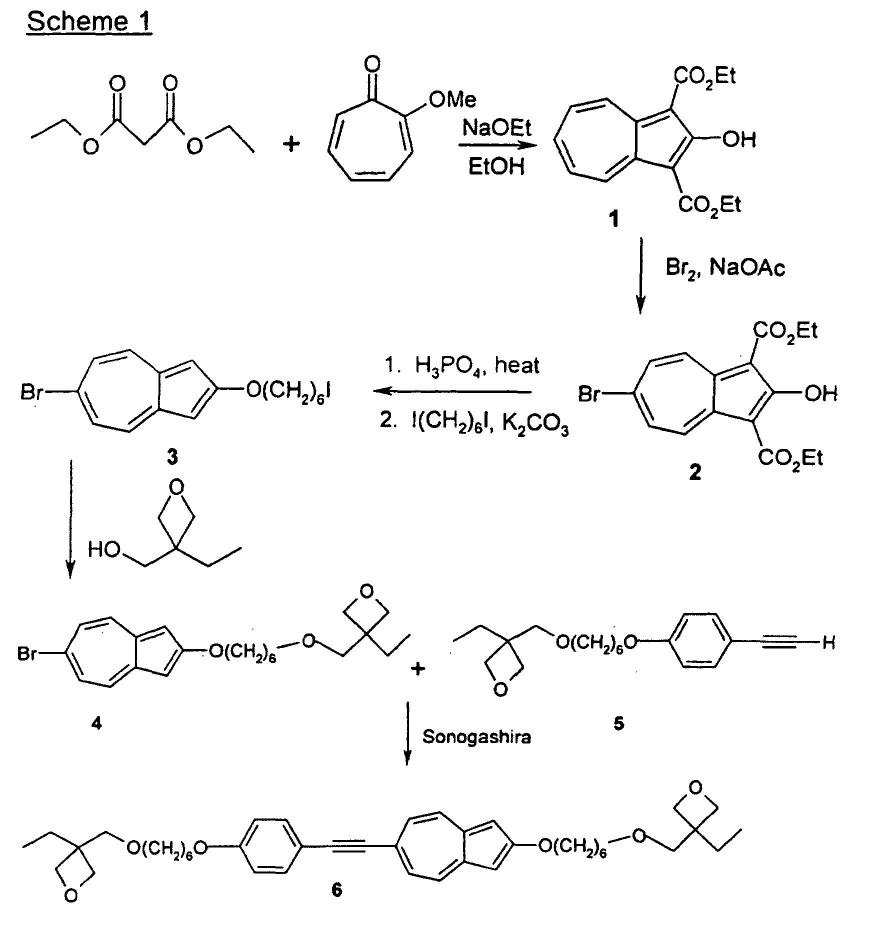

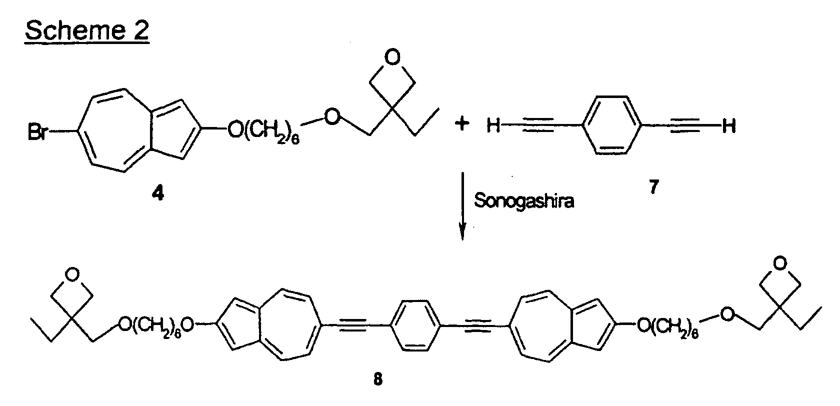

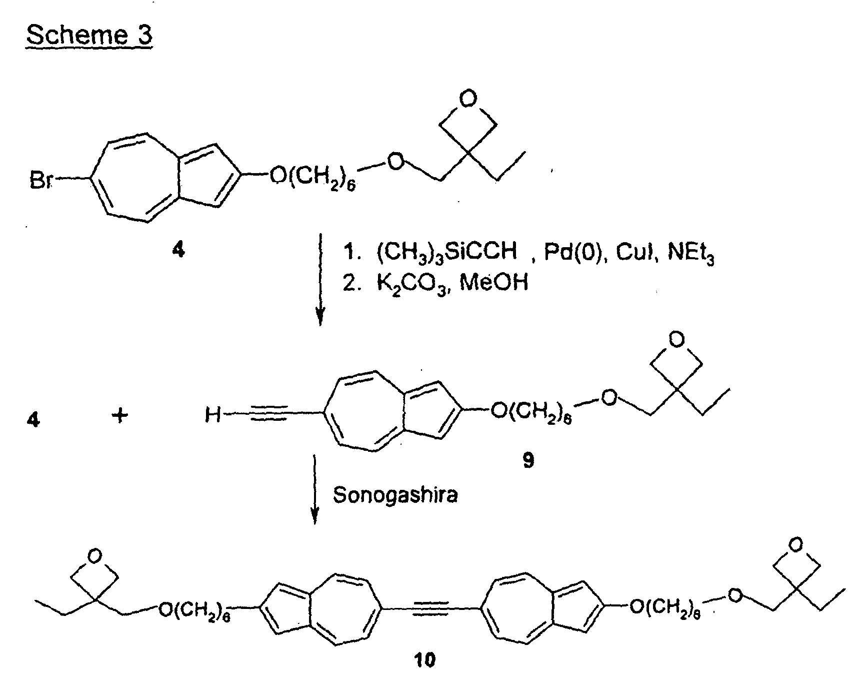

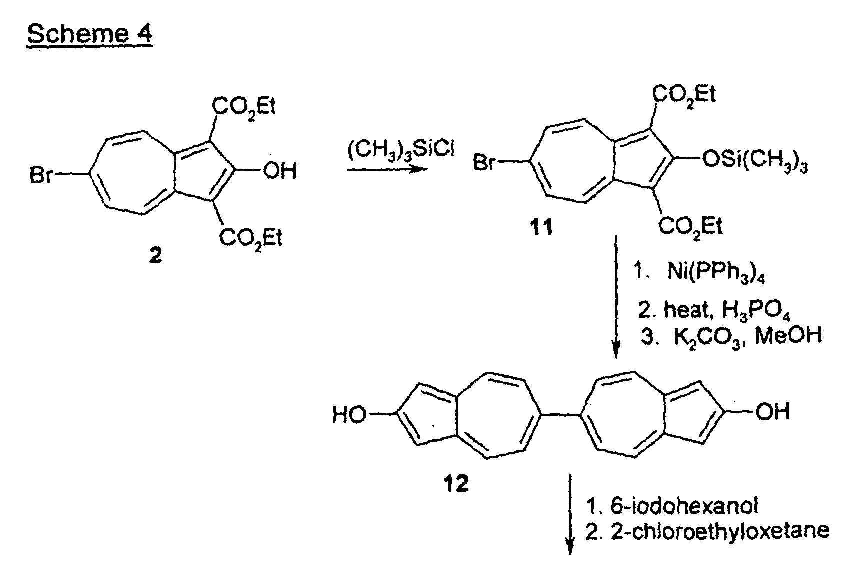

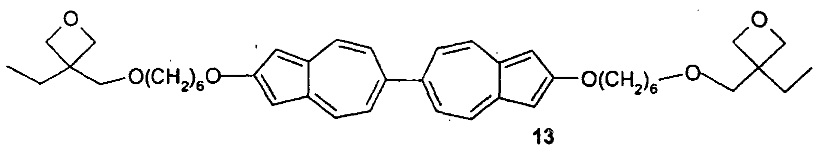

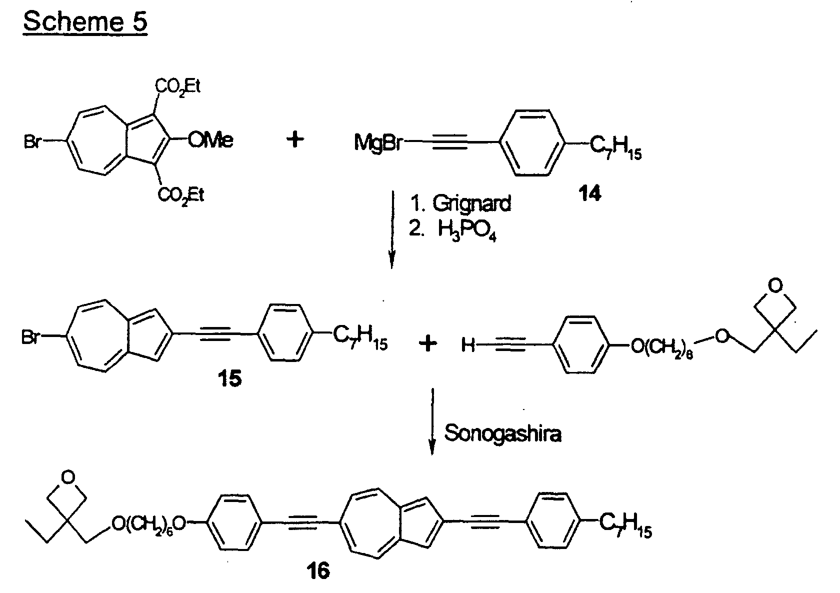

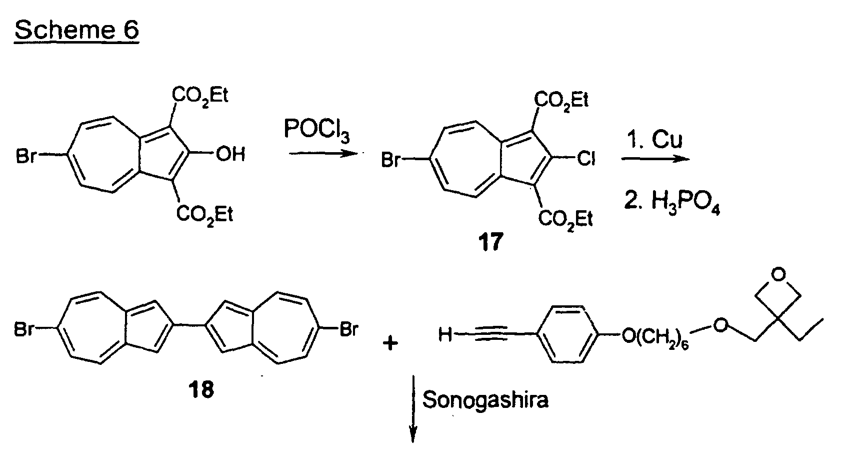

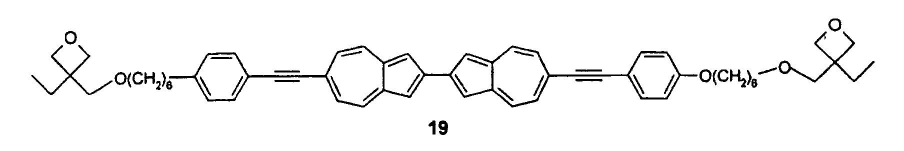

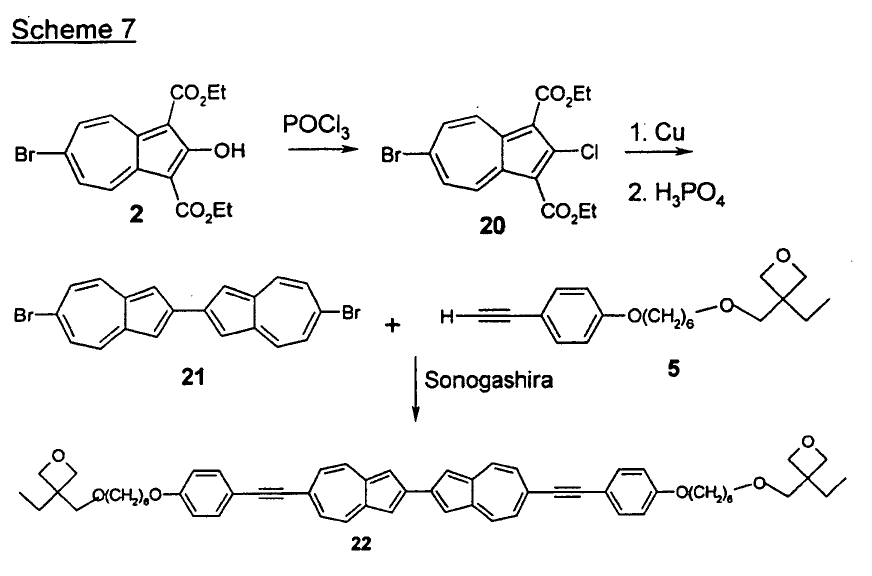

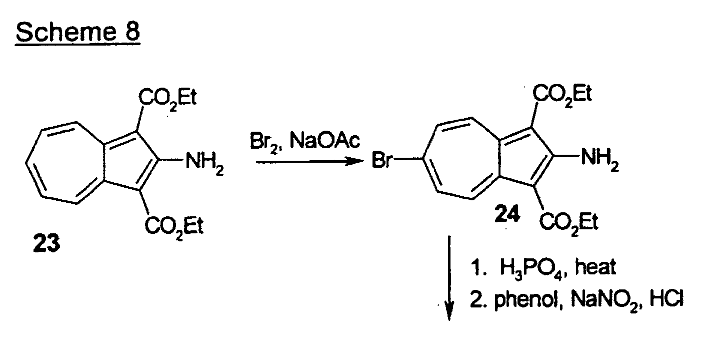

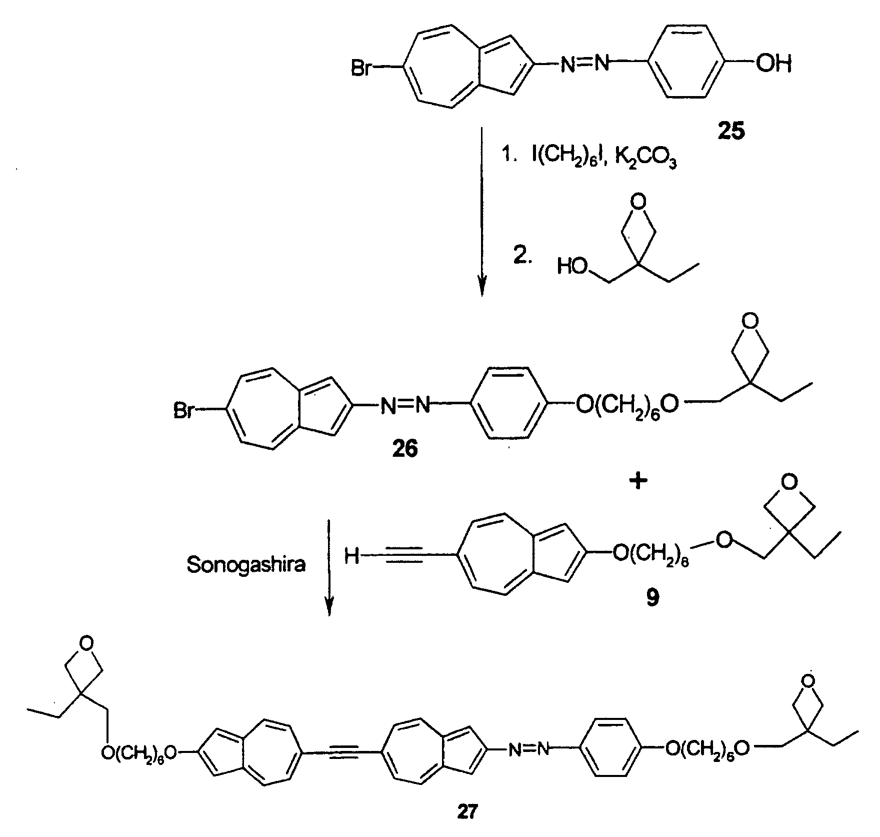

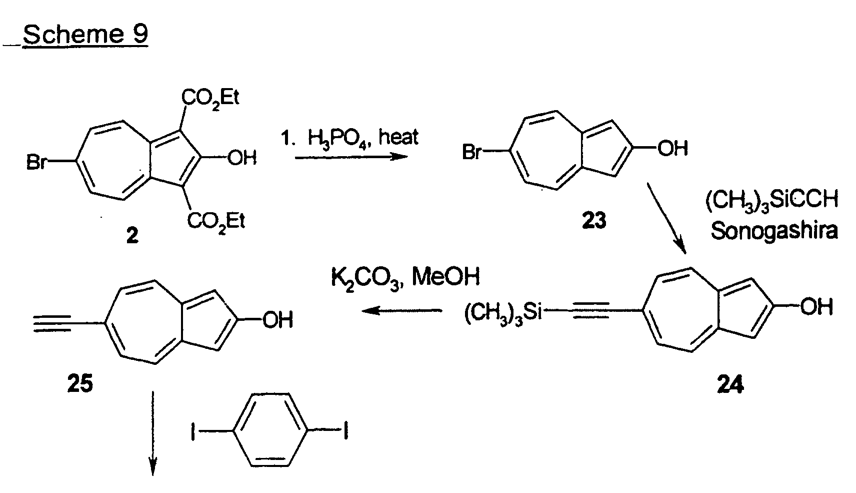

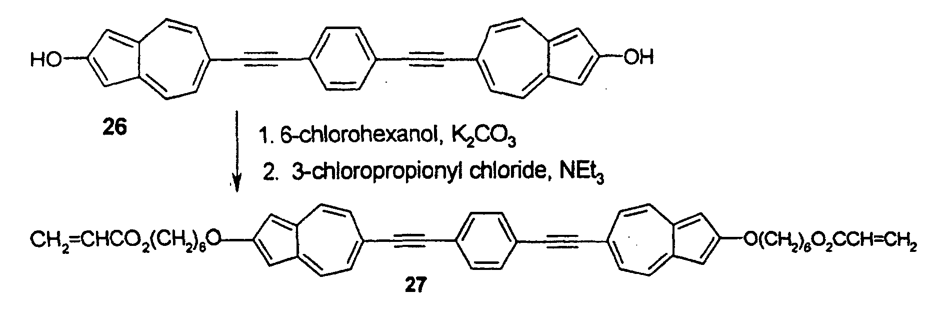

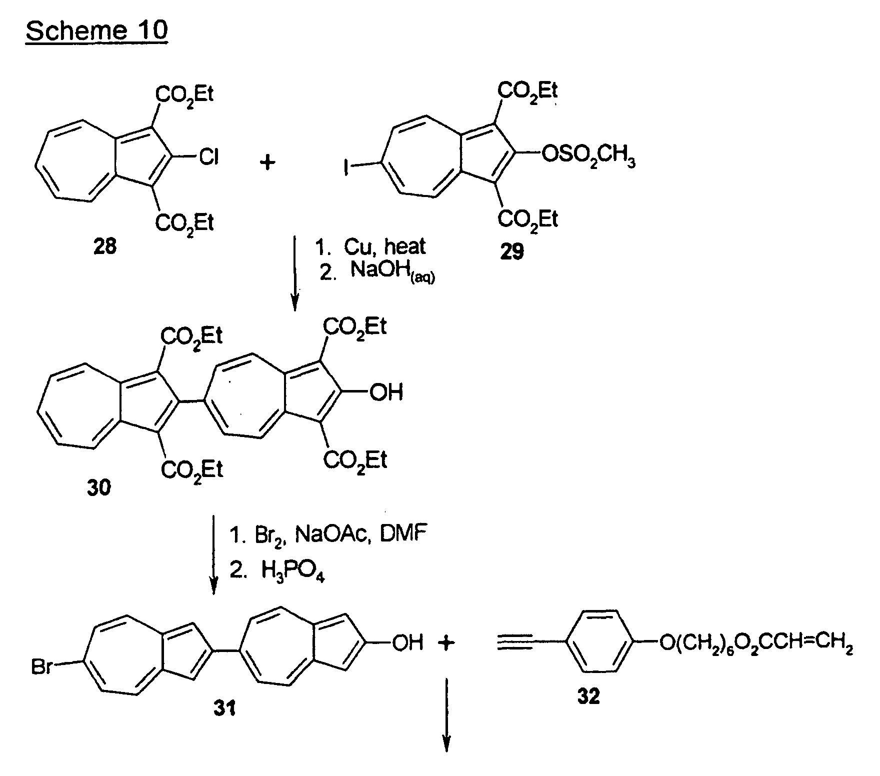

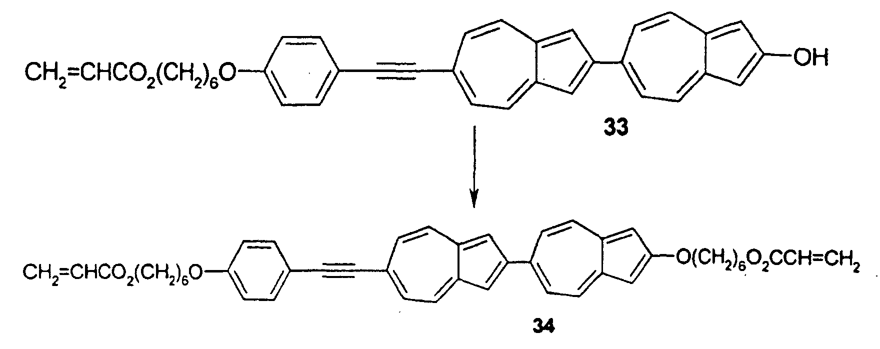

A preferred embodiment of the present invention relates to reactive azulenes, in particular those of formula I, that are mesogenic or liquid crystalline. These materials are particularly useful as semiconductors or charge transport materials, as they can be aligned into uniform highly ordered orientation in their liquid crystal phase by known techniques, thus exhibiting a higher degree of order that leads to particularly high charge carrier mobility. The highly ordered liquid crystal state can be fixed by in situ polymerisation or crosslinking via the groups P to yield polymer films with high charge carrier mobility and high thermal, mechanical and chemical stability.

It is also possible to copolymerise the azulenes according to the present invention with other polymerisable mesogenic or liquid crystal monomers that are known from prior art, in order to induce or enhance liquid crystal phase behaviour.

Thus, another object of the invention is a polymerisable liquid crystal material comprising one or more reactive azulenes of the present invention as described above and below comprising at least one reactive group, and optionally comprising one or more further reactive compounds, wherein at least one of the reactive azulenes of the present invention and/or the further reactive compounds is mesogenic or liquid crystalline.

Particularly preferred are liquid crystal materials having a nematic and/or smectic phase. For FET applications smectic materials are especially preferred. For OLED applications nematic or smectic materials are especially preferred.

Another object of the present invention is an anisotropic polymer film with charge transport properties obtainable from a polymerisable liquid crystal material as defined above that is aligned in its liquid crystal phase into macroscopically uniform orientation and polymerised or crosslinked to fix the oriented state.

Polymerisation is preferably carried out by in-situ polymerisation of a coated layer of the material, preferably during fabrication of the electronic or optical device comprising the inventive semiconductor material. In case of liquid crystal materials, these are preferably aligned in their liquid crystal state into homeotropic orientation prior to polymerisation, where the conjugated pi-electron systems are orthogonal to the direction of charge transport. This ensures that the intermolecular distances are minimised and hence then energy required to transport charge between molecules is minimised. The molecules are then polymerised or crosslinked to fix the uniform orientation of the liquid crystal state. Alignment and curing are carried out in the liquid crystal phase or mesophase of the material. This technique is known in the art and is generally described for example in D.J. Broer, et al., Angew. Makromol. Chem. 183, (1990), 45-66

Alignment of the liquid crystal material can be achieved for example by treatment of the substrate onto which the material is coated, by shearing the material during or after coating, by application of a magnetic or electric field to the coated material, or by the addition of surface-active compounds to the liquid crystal material. Reviews of alignment techniques are given for example by I. Sage in "Thermotropic Liquid Crystals", edited by G. W. Gray, John Wiley & Sons, 1987, pages 75-77, and by T. Uchida and H. Seki in "Liquid Crystals - Applications and Uses Vol. 3", edited by B. Bahadur, World Scientific Publishing, Singapore 1992, pages 1-63. A review of alignment materials and techniques is given by J. Cognard, Mol. Cryst. Liq. Cryst. 78, Supplement 1 (1981), pages 1-77.

Polymerisation takes place by exposure to heat or actinic radiation. Actinic radiation means irradiation with light, like UV light, IR light or visible light, irradiation with X-rays or gamma rays or irradiation with high energy particles, such as ions or electrons. Preferably polymerisation is carried out by UV irradiation at a non-absorbing wavelength. As a source for actinic radiation for example a single UV lamp or a set of UV lamps can be used. When using a high lamp power the curing time can be reduced. Another possible source for actinic radiation is a laser, like e.g. a UV laser, an IR laser or a visible laser.

Polymerisation is preferably carried out in the presence of an initiator absorbing at the wavelength of the actinic radiation. For example, when polymerising by means of UV light, a photoinitiator can be used that decomposes under UV irradiation to produce free radicals or ions that start the polymerisation reaction. When curing polymerisable materials with acrylate or methacrylate groups, preferably a radical photoinitiator is used, when curing polymerisable materials with vinyl, epoxide and oxetane groups, preferably a cationic photoinitiator is used. It is also possible to use a polymerisation initiator that decomposes when heated to produce free radicals or ions that start the polymerisation. As a photoinitiator for radical polymerisation for example the commercially available Irgacure 651, Irgacure 184, Darocure 1173 or Darocure 4205 (all from Ciba Geigy AG) can be used, whereas in case of cationic photopolymerisation the commercially available UVI 6974 (Union Carbide) can be used.

The polymerisable material can additionally comprise one or more other suitable components such as, for example, catalysts, sensitizers, stabilizers, inhibitors, chain-transfer agents, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

Reactive azulenes comprising one or more groups P-Sp-X can also be copolymerised with polymerisable mesogenic compounds to induce, or, in case of mesogenic materials of formula I, enhance liquid crystal phase behaviour. Polymerisable mesogenic compounds that are suitable as comonomers are known in prior art and disclosed for example in WO 93/22397; EP 0,261,712; DE 195,04,224; WO 95/22586 and WO 97/00600.

SCLCPs can be prepared from the polymerisable compounds or mixtures according to the invention by the methods described above, or by conventional polymerisation techniques which are known to those skilled in the art, including for example radicalic, anionic or cationic chain polymerisation, polyaddition or polycondensation. Polymerisation can be carried out for example as polymerisation in solution, without the need of coating and prior alignment, or polymerisation in situ. It is also possible to form SCLCPs by grafting compounds according to the invention with a suitable reactive group, or mixtures thereof, to presynthesized isotropic or anisotropic polymer backbones in a polymeranaloguous reaction. For example, compounds with a terminal hydroxy group can be attached to polymer backbones with lateral carboxylic acid or ester groups, compounds with terminal isocyanate groups can be added to backbones with free hydroxy groups, compounds with terminal vinyl or vinyloxy groups can be added e.g. to polysiloxane backbones with Si-H groups. It is also possible to form SCLCPs by copolymerisation or polymeranaloguous reaction from the inventive compounds together with conventional mesogenic or non mesogenic comonomers. Suitable comonomers are known to those skilled in the art. In principle it is possible to use all conventional comonomers known in the art that carry a reactive or polymerisable group capable of undergoing the desired polymer-forming reaction, like for example a polymerisable or reactive group P as defined above. Typical mesogenic comonomers are for example those mentioned in WO 93/22397; EP 0,261,712; DE 195,04,224; WO 95/22586 and WO 97/00600. Typical non mesogenic comonomers are for example alkyl mono- or diacrylates or alkyl mono- or dimethacrylates with alkyl groups of 1 to 20 C atoms, like methyl acrylate or methyl methacrylate, trimethylpropane trimethacrylate or pentaerythritol tetraacrylate.

The materials of the present invention are useful as optical, electronic and semiconductor materials, in particular as charge transport materials in field effect transistors (FETs) e.g. as components of integrated circuitry, ID tags or TFT applications. Alternatively, they may be used in organic light emitting diodes (OLEDs) in electroluminescent display applications or as backlight of e.g. liquid crystal displays, as photovoltaics or sensor materials, for electrophotographic recording, and for other semiconductor applications.

Especially the oligomers and polymers according to the invention show advantageous solubility properties which allow production processes using solutions of these compounds. Thus films, including layers and coatings, may be generated by low cost production techniques e.g. spin coating. Suitable solvents or solvent mixtures comprise alkanes and/ or aromatics, especially their fluorinated derivatives.

The materials of the present invention are useful as optical, electronic and semiconductor materials, in particular as charge transport materials in field effect transistors (FETs), as photovoltaics or sensor materials, for electrophotographic recording, and for other semiconductor applications. Such FETs, where an organic semiconductive material is arranged as a film between a gate-dielectric and a drain and a source electrode, are generally known e.g. from US 5,892,244, WO 00/79617, US 5,998,804, and from the references cited in the background and prior art chapter and listed below. Due to the advantages, like low cost production using the solubility properties of the compounds according to the invention and thus the processibility of large surfaces, preferred applications of these FETs are such as integrated circuitry, TFT-displays and security applications.

In security applications, field effect transistors and other devices with semiconductive materials, like transistors or diodes, may be used for ID tags or security markings to authenticate and prevent counterfeiting of documents of value like banknotes, credit cards or ID cards, national ID documents, licenses or any product with money value, like stamps, tickets, shares, cheques etc..

Alternatively, the materials according to the invention may be used in organic light emitting devices or diodes (OLEDs), e.g. in display applications or as backlight of e.g. liquid crystal displays. Common OLEDs are realized using multilayer structures. An emission layer is generally sandwiched between one or more electron-transport and/or hole-transport layers. By applying an electric voltage electrons and holes as charge carriers move towards the emission layer where their recombination leads to the excitation and hence luminescence of the lumophor units contained in the emission layer. The inventive compounds, materials and films may be employed in one or more of the charge transport layers and/ or in the emission layer, corresponding to their electrical and/ or optical properties. Furthermore their use within the emission layer is especially advantageous, if the compounds, materials and films according to the invention show electroluminescent properties themselves or comprise electroluminescent groups or compounds. The selection, characterization as well as the processing of suitable monomeric, oligomeric and polymeric compounds or materials for the use in OLEDs is generally known by a person skilled in the art, see e. g. Meerholz, Synthetic Materials, 111-112, 2000, 31-34, Alcala, J. Appl. Phys., 88, 2000, 7124-7128 and the literature cited therein.

According to another use, the inventive compounds, materials or films, especially those which show photoluminescent properties, may be employed as materials of light sources, e.g. of display devices such as described in EP 0 889 350 A1 or by C. Weder et al., Science, 279, 1998, 835-837.

A further aspect of the invention relates to both the oxidised and reduced form of the compounds and materials according to this invention. Either loss or gain of electrons results in formation of a highly delocalised ionic form, which is of high conductivity. This can occur on exposure to common dopants. Suitable dopants and methods of doping are known to those skilled in the art, e.g. from EP 0 528 662, US 5,198,153 or WO 96/21659.

The doping process typically implies treatment of the semiconductor material with an oxidating or reducing agent in a redox reaction to form delocalised ionic centres in the material, with the corresponding counterions derived from the applied dopants. Suitable doping methods comprise for example exposure to a doping vapor in the atmospheric pressure or at a reduced pressure, electrochemical doping in a solution containing a dopant, bringing a dopant into contact with the semiconductor material to be thermally diffused, and ion-implantantion of the dopant into the semiconductor material.

When electrons are used as carriers, suitable dopants are for example halogens (e.g. I₂, Cl₂, Br₂, ICl, ICl₃, IBr and IF), Lewis acids (e.g. PF₅, AsF₅, SbF₅, BF₃, BCl₃, SbCl₅, BBr₃ and SO₃), protonic acids, organic acids, or amino acids (e.g. HF, HCI, HNO₃, H₂SO₄, HCIO₄, FSO₃H and CISO₃H), transition metal compounds (e.g. FeCl₃, FeOCI, Fe(ClO₄)₃, Fe(4-CH₃C₆H₄SO₃)₃, TiCl₄, ZrCl₄, HfCl₄, NbF₅, NbCl₅, TaCl₅, MoF₅, MoCl₅, WF₅, WCl₆, UF₆ and LnCl₃ (wherein Ln is a lanthanoid), anions (e.g. Cl⁻, Br⁻, I⁻, I₃⁻, HSO₄⁻, SO₄²⁻, NO₃⁻, ClO₄⁻, BF₄⁻, PF₆⁻, AsF₆⁻, SbF₆⁻, FeCl₄⁻, Fe(CN)₆³⁻, and anions of various sulfonic acids, such as aryl-SO₃⁻). When holes are used as carriers, examples of dopants are cations (e.g. H⁺, Li⁺, Na⁺, K⁺, Rb⁺ and Cs⁺), alkali metals (e.g., Li, Na, K, Rb, and Cs), alkaline-earth metals (e.g., Ca, Sr, and Ba), O₂, XeOF₄, (NO₂⁺) (SbF₆⁻), (NO₂⁺) (SbCl₆⁻), (NO₂⁺) (BF₄⁻), AgClO₄, H₂IrCl₆, La(NO₃)₃·6H₂O, FSO₂OOSO₂F, Eu, acetylcholine, R₄N⁺, (R is an alkyl group), R₄P⁺ (R is an alkyl group), R₆As⁺ (R is an alkyl group), and R₃S⁺ (R is an alkyl group).

The conducting form of the compounds and materials of the present invention can be used as an organic "metal" in applications, for example, but not limited to, charge injection layers and ITO planarising layers in organic light emitting diode applications, films for flat panel displays and touch screens, antistatic films, printed conductive substrates, patterns or tracts in electronic applications such as printed circuit boards and condensers.

## Claims

1. Reactive mesogenic azulenes, consisting of a central mesogenic core comprising one or more azulene groups, and optionally comprising further unsaturated organic groups that form a conjugated system together with the azulene groups, **characterized in that** said mesogenic core is linked, optionally via spacer groups, to one or more reactive groups that are capable of participating in a polymerisation reaction or capable of being grafted to a polymer backbone in a polymer analogous reaction, wherein the reactive groups are different from OH and ester groups and the azulene groups are linked to their neighboured groups at the 2- and 6-position.

2. Reactive mesogenic azulenes according to claim 1, **characterized in that** they are selected of formula I
P-Sp-T-R¹ I
wherein
P is a polymerisable or reactive group,
Sp is a spacer group or a single bond,
R¹ is H, halogen, CN, NO₂, an aliphatic, alicyclic or aromatic group with up to 40 C atoms that optionally comprises one or more hetero atoms and one or more fused rings, or P- Sp-, and
T is a mesogenic group comprising one or more azulene groups that are optionally substituted and optionally comprise fused azulene groups, with the proviso that azulene groups linked to their neighboured groups at the 1- and 3-position are excluded.

3. Reactive mesogenic azulenes according to claim 2, **characterized in that** T is selected of formula II
-Z¹-(A¹-Z²)ₘ-(T¹-Z³)ₙ-(A²-Z⁴)ₒ- II
wherein
A¹ and A² are independently of each other an aromatic, heteroaromatic, group with up to 18 C atoms which is unsubstituted, mono- or polysubstituted with R¹, and A¹ may also denote T¹,
Z¹ to Z⁴ are independently of each other -O-, -S-, -CO-, -COO-, -OCO-, -O-COO-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CX¹=CX²-, -C≡C-, -CH=CH-COO-, -OCO-CH=CH- or a single bond,
X¹ and X² are independently of each other H, F, Cl or CN,
T¹ is a group consisting of 1, 2, 3, or 4 azulene groups which are optionally substituted by R²,
R² is H, halogen, CN, NO₂, straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S- CO-, -CO-S-, -CH=CH- or -C≡C- in such a manner that O and/or S atoms are not linked directly to one another, or denotes an aromatic or heteroaromatic group or P-Sp as defined in formula I,
R⁰ and R⁰⁰ are independently of each other H or alkyl with 1 to 12 C-atoms,
m and o are independently of each other 0, 1, 2 or 3, and
n is 1, 2 or 3.

4. Reactive mesogenic azulenes according to claim 3, **characterized in that** T¹ is selected of the following subformulae 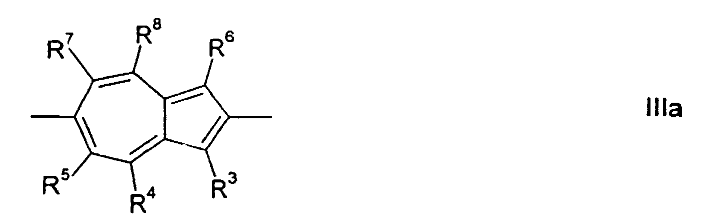 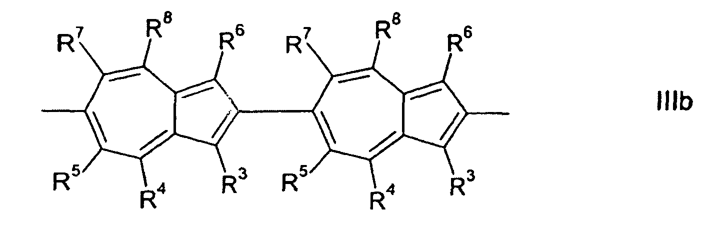 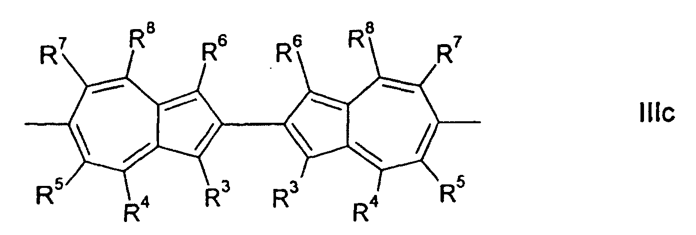 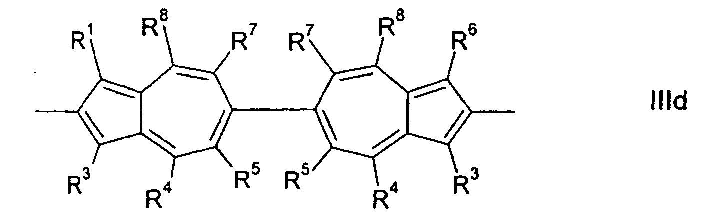 wherein R³ to R⁸ have independently of each other one of the meanings of R² in formula II.

5. Reactive mesogenic azulenes according to claim 3 and/or 4, **characterized in that** A¹ and A² are selected from 1,4-phenylene, 1,4-cyclohexa-1,3-diene, 1,4-cyclohexenylene in which, in addition, one or more CH groups are optionally replaced by N and one or two non-adjacent CH₂ groups are optioanlly replaced by O and/or S, thiophene-2,5-diyl, thienothiophene-2,5-diyl, dithienothiophene-2,6-diyl, 1,4-bicyclo-(2,2,2)-octylene, naphthalene-2,6-diyl, furan 2,5 diyl, and indane-2,5-diyl, wherein these groups are unsubstituted, mono- or polysubstituted by L, with L being halogen, CN, SCN, NO₂, SF₅ or an alkyl, alkoxy, alkylcarbonyl or alkoxycarbonyl group with 1 to 4 C atoms, wherein one or more H atoms are optionally substituted with F or Cl.

6. Reactive mesogenic azulenes according to at least one of claims 2 to 5, **characterized in that** R is H, F, Cl or straight chain, branched or cyclic alkyl with 1 to 20 C-atoms, which is unsubstituted, mono- or poly-substituted by F, Cl, Br, I or CN, wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -CH=CH- or -C≡C- in such a manner that O and/or S atoms are not linked directly to one another, or an aromatic or heteroaromatic group

7. Reactive mesogenic azulenes according to at least one of claims 1 to 6, **characterized in that** the reactive group or the group P is selected from CH₂=CW¹-COO-, 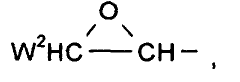 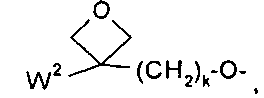 CH₂=CW²-(O)ₖ₁-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, Phe being 1,4-phenylene and k₁ and k₂ being independently of each other 0 or 1.

8. Reactive mesogenic azulenes according to at least one of claims 1 to 7, **characterized in that** they are selected from the following formulae 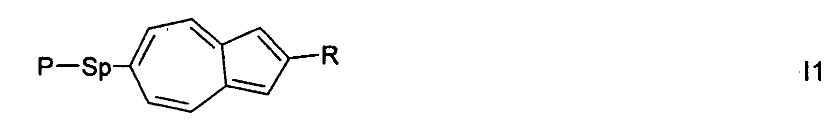 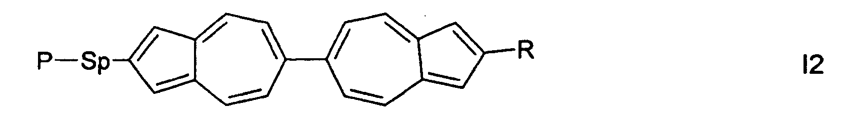 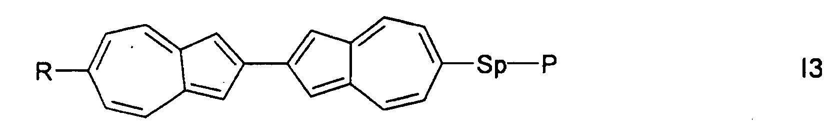 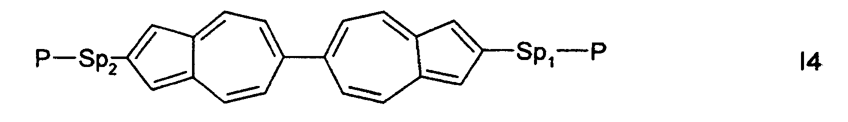 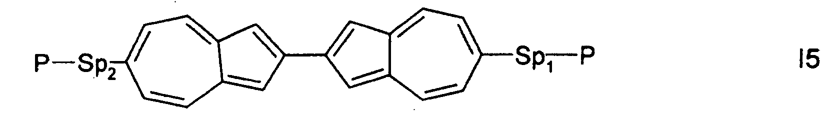 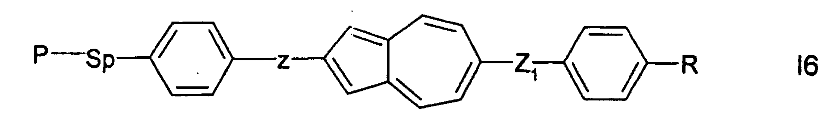 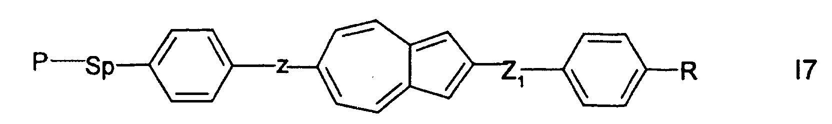 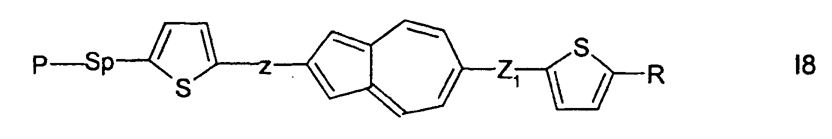 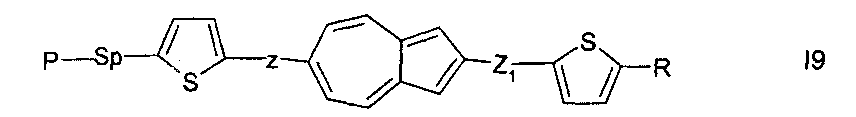 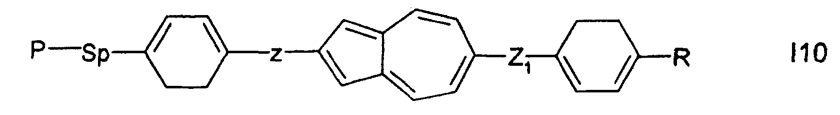 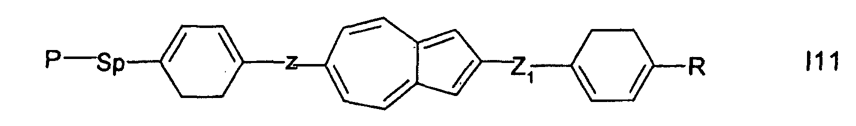 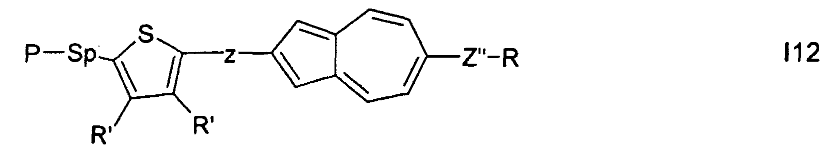 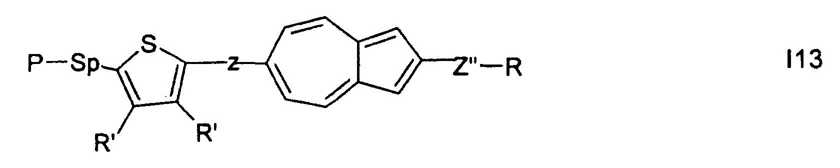 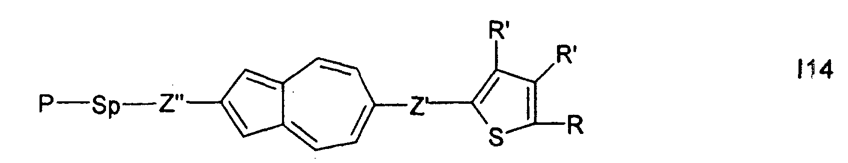 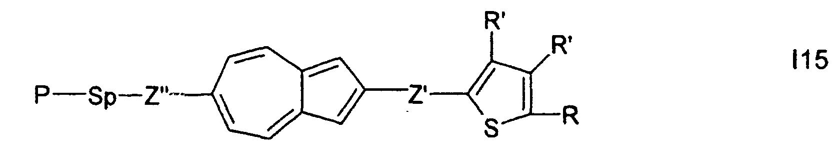 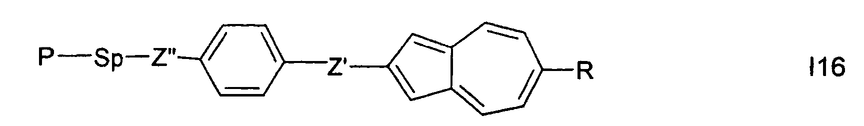 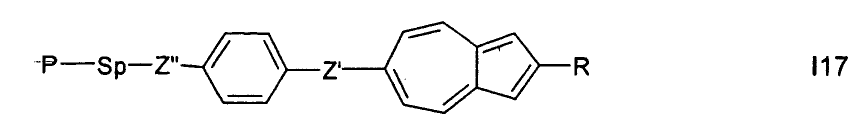 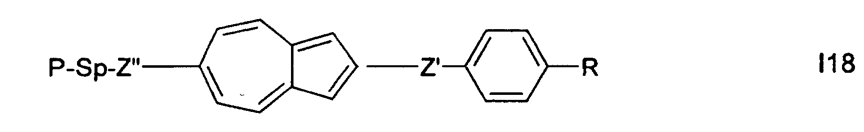 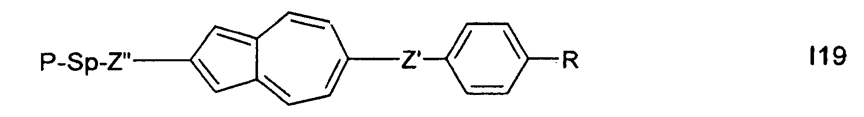 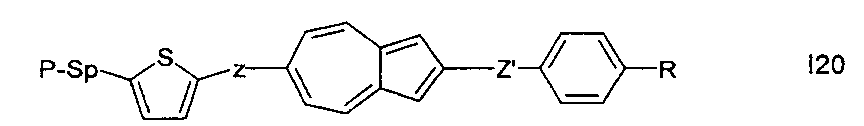 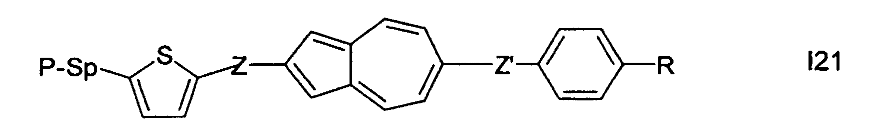 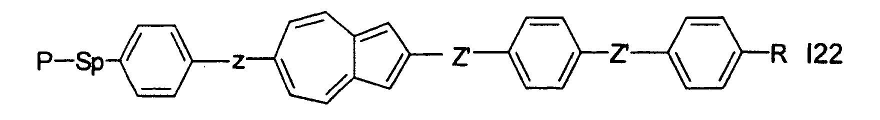 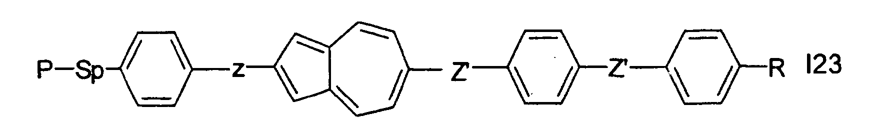 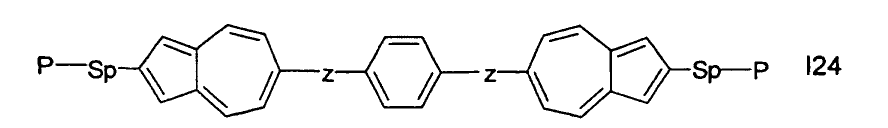 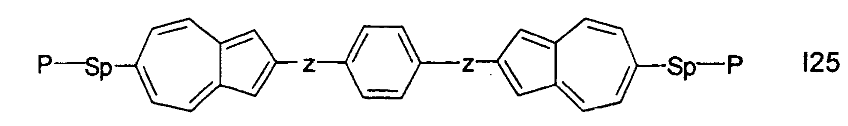 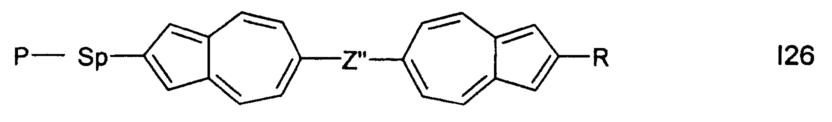 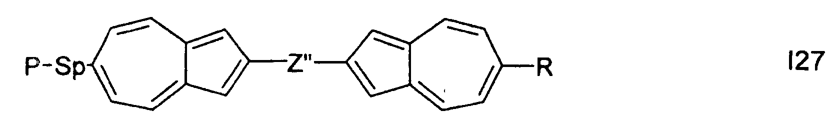 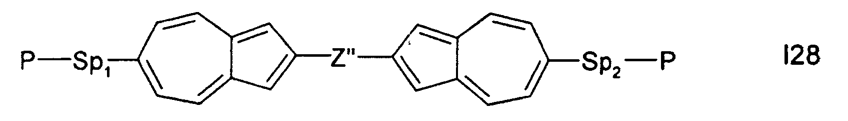 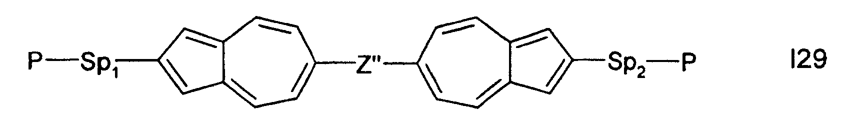 wherein P, Sp and n have the meanings of formula I,
Sp¹ and Sp² are different groups Sp as defined in formula I,
Z and Z' have independently of each other one of the meanings of Z¹ in formula II, and are preferably -CH=CH-, -CH=CF-, -CF=CH-, CH=CCI-, -CCI=CH-, -CF=CF-, -CCI=CCI-, -C≡C- or a single bond,
Z" has one of the meanings of Z¹ in formula II, and is preferably -CH=CH-, -CH=CF-, -CF=CH-, CH=CCI-, -CCI=CH-, -CF=CF-, -CCl=CCl- or -C≡C-,
R has in each case independently one of the meanings of R¹ of formula I,
R' has in each case independently one of the meanings of R² of formula II,
wherein the azulene group is optionally mono-or polysubstituted by R² as defined in formula II, and wherein in formulae I6 to I29 the azulene-2,6-diyl groups are optionally replaced, independently in each occurrence, by [2,6']-bisazulene-6,2'-diyl, [2,2']-bisazulene-6,6'-diyl or [6,6']-bisazulene-2,2'-diyl, all of which are optionally mono- or polysubstituted by R² as defined in formula II.

9. Reactive mesogenic azulenes according to at least one of claims 1 to 8, **characterized in that** they are mesogenic or liquid crystalline.

10. Reactive liquid crystal mixture comprising one or more reactive mesogenic azulenes according to at least one of claims 1 to 9 and optionally one or more further reactive compounds, wherein at least one of said azulenes and further reactive compounds is mesogenic or liquid crystalline.

11. Anisotropic polymer film with charge transport properties obtainable from a reactive liquid crystal mixture according to claim 10 that is aligned in its liquid crystal phase into macroscopically uniform orientation and polymerised or crosslinked to fix the oriented state.

12. Side chain liquid crystal polymer obtained by polymerisation of one or more compounds or a polymerisable material according to claims 1 to 10 or by grafting one or more compounds or a polymerisable material according to claims 1 to 10 to a polymer backbone in a polymeranaloguous reaction, optionally with one or more additional mesogenic or non-mesogenic comonomers.

13. Use of the reactive mesogenic azulenes, reactive mixtures and polymers according to at least one of claims 1 to 12 as semiconductors or charge transport materials, in particular in optical, electrooptical or electronic devices, like for example components of integrated circuitry, field effect transistors (FET) for example as thin film transistors in flat panel display applications or for Radio Frequency Identification (RFID) tags, or in semiconducting components for organic light emitting diode (OLED) applications such as electroluminescent displays or backlights of e.g. liquid crystal displays, for photovoltaic or sensor devices, as electrode materials in batteries, as photoconductors and for electrophotographic applications like electrophotographic recording, or as light-modulating components for liquid crystal displays, optical films or other optical or electrooptical devices.

14. Field effect transistor, for example as a component of integrated circuitry, as a thin film transistor in flat panel display applications, or in a Radio Frequency Identification (RFID) tag, comprising one or more reactive mesogenic azulenes, reactive mixtures or polymers according to at least one of claims 1 to 12.

15. Security marking or device comprising comprising one or more reactive mesogenic azulenes, reactive mixtures or polymers according to at least one of claims 1 to 12, or a FET or RFID tag according to claim 14.

16. Reactive mesogenic azulenes, reactive mixtures or polymers according to at least one of claims 1 to 12, which are oxidatively or reductively doped to form conducting ionic species.

17. Charge injection layer, planarising layer, antistatic film or conducting substrate or pattern for electronic applications or flat panel displays, comprising one or more reactive mesogenic azulenes, reactive mixtures or polymer films according to claim 16.

## Patentansprüche

1. Reaktive mesogene Azulene, bestehend aus einem zentralen mesogenen Kern mit einer oder mehreren Azulengruppen, und gegebenenfalls mit weiteren ungesättigten organischen Gruppen, die zusammen mit den Azulengruppen ein konjugiertes System bilden, **dadurch gekennzeichnet, dass** der mesogene Kern, gegebenenfalls über Spacergruppen, mit einer oder mehreren reaktiven Gruppen verknüpft ist, die an einer Polymerisationsreaktion teilnehmen oder in einer polymeranalogen Reaktion auf ein Polymerrückgrat aufgepfropft werden können, worin die reaktiven Gruppen von OH und Estergruppen verschieden und die Azulengruppen mit ihren Nachbargruppen in 2- und 6-Stellung verknüpft sind.

2. Reaktive mesogene Azulene nach Anspruch 1, **dadurch gekennzeichnet, dass** sie ausgewählt sind aus Formel I
P-Sp-T-R¹ I
worin
P eine polymerisierbare oder reaktive Gruppe bedeutet,
Sp eine Spacergruppe oder eine Einfachbindung bedeutet,
R¹ H, Halogen, CN, NO₂, eine aliphatische, alicyclische oder aromatische Gruppe mit bis zu 40 C-Atomen, die gegebenenfalls ein oder mehrere Heteroatome und einen oder mehrere anellierte Ringe enthält, oder P-Sp- bedeutet, und
T eine mesogene Gruppe mit einer oder mehreren Azulengruppen bedeutet, die gegebenenfalls substituiert sind und gegebenenfalls anellierte Azulengruppen enthalten, mit der Maßgabe, dass Azulengruppen, die mit ihren Nachbargruppen in 1- und 3-Stellung verknüpft sind, ausgenommen sind.

3. Reaktive mesogene Azulene nach Anspruch 2, **dadurch gekennzeichnet, dass** T ausgewählt ist aus der Formel II
-Z¹-(A¹-Z²)ₘ-(T¹-Z³)ₙ-(A²-Z⁴)ₒ- II
worin
A¹ und A² unabhängig voneinander eine aromatische, heteroaromatische, Gruppe mit bis zu 18 C-Atomen bedeuten, die unsubstituiert oder ein- oder mehrfach mit R¹ substituiert ist, und A¹ auch T¹ bedeuten kann,
Z¹ bis Z⁴ unabhängig voneinander -O-, -S-, -CO-, -COO-, -OCO-, -O-COO-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CX¹=CX²-, -C≡C-, -CH=CH- COO-, -OCO-CH=CH- oder eine Einfachbindung bedeuten,
X¹ und X² unabhängig voneinander H, F, Cl oder CN bedeuten,
T¹ eine Gruppe bestehend aus 1, 2, 3 oder 4 Azulenringen bedeutet, die gegebenenfalls durch R² substituiert sind,
R² H, Halogen, CN, NO₂, geradkettiges, verzweigtes oder cyclisches Alkyl mit 1 bis 20 C-Atomen, das unsubstituiert oder ein- oder mehrfach durch F, Cl, Br, I oder CN substituiert ist, wobei gegebenenfalls eine oder mehrere nicht benachbarte CH₂-Gruppen jeweils unabhängig voneinander durch -O-, -S-, -NH-, -NR⁰-, -SiR⁰R⁰⁰-, -CO-, -COO-, -OCO-, -OCO-O-, -S-CO-, -CO-S-, -CH=CH- oder -C≡C so ersetzt sind, dass O- und/oder S-Atome nicht direkt miteinander verknüpft sind, oder eine aromatische oder heteroaromatische Gruppe oder P-Sp wie in Formel I definiert bedeutet,
R⁰ und R⁰⁰ unabhängig voneinander H oder Alkyl mit 1 bis 12 C-Atomen bedeuten,
m und o unabhängig voneinander 0, 1, 2 oder 3 bedeuten, und
n 1, 2 oder 3 bedeutet.

4. Reaktive mesogene Azulene nach Anspruch 3, **dadurch gekennzeichnet, dass** T¹ ausgewählt ist aus den folgenden Teilformeln 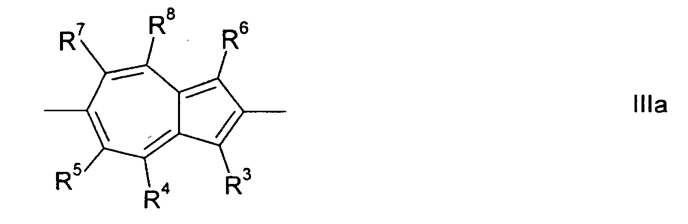 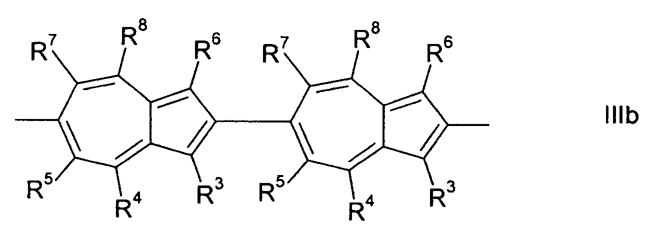 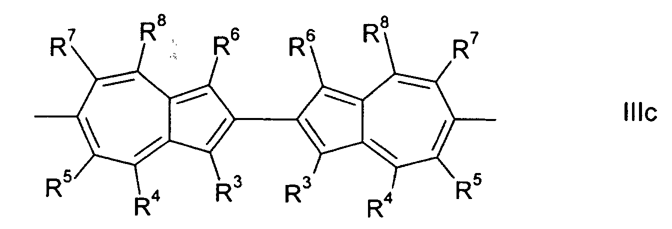 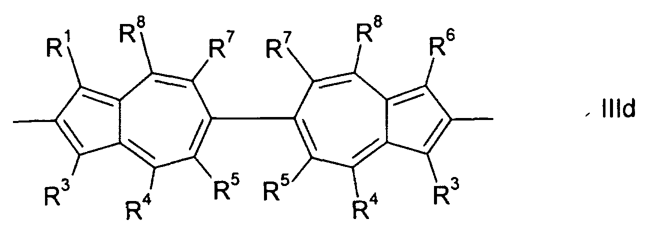 worin R³ bis R⁸ unabhängig voneinander eine der Bedeutungen von R² in Formel II besitzen.

5. Reaktive mesogene Azulene nach Anspruch 3 und/oder 4, **dadurch gekennzeichnet, dass** A¹ und A² ausgewählt sind aus 1,4-Phenylen, 1,4-Cyclohexa-1,3-dien, 1,4-Cyclohexenylen, in dem zusätzlich eine oder mehrere CH-Gruppen gegebenenfalls durch N und eine oder zwei nicht benachbarte CH₂-Gruppen gegebenenfalls durch O und/oder S ersetzt sind, Thiophen-2,5-diyl, Thienothiophen-2,5-diyl, Dithienothiophen-2,6-diyl, 1,4-Bicyclo-(2,2,2)-octylen, Naphthalin-2,6-diyl, Furan-2,5-diyl und Indan-2,5-diyl, wobei alle diese Gruppen unsubstituiert oder ein- oder mehrfach durch L substituiert sind und L Halogen, CN, SCN, NO₂, SF₅ oder eine Alkyl-, Alkoxy-, Alkylcarbonyl- oder Alkoxycarbonylgruppe mit 1 bis 4 C-Atomen bedeutet, worin ein oder mehrere H-Atome gegebenenfalls mit F oder Cl substituiert sind.

6. Reaktive mesogene Azulene nach mindestens einem der Ansprüche 2 bis 5, **dadurch gekennzeichnet, dass** R H, F, Cl oder geradkettiges, verzweigtes oder cyclisches Alkyl mit 1 bis 20 C-Atomen, das unsubstituiert oder ein- oder mehrfach durch F, Cl, Br, I oder CN substituiert ist, wobei gegebenenfalls eine oder mehrere nicht benachbarte CH₂-Gruppen jeweils unabhängig voneinander durch -O-, -S-, -NH-, -NR⁰-, -SiR⁰R⁰⁰-, -CO-, -COO-, -OCO-, -OCO-O-, -S-CO-, -CO-S-, -CH=CH- oder -C≡C- so ersetzt sind, dass O- und/oder S-Atome nicht direkt miteinander verknüpft sind, oder eine aromatische oder heteroaromatische Gruppe bedeutet.

7. Reaktive mesogene Azulene nach mindestens einem der Ansprüche 1 bis 6, **dadurch gekennzeichnet, dass** die reaktive Gruppe oder die Gruppe P ausgewählt ist aus CH₂=CW¹-COO-, 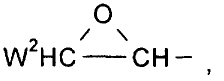 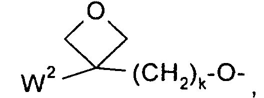 CH₂=CW²-(O)ₖ₁-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- und W⁴W⁵W⁶Si-, wobei W¹ H, Cl, CN, Phenyl oder Alkyl mit 1 bis 5 C-Atomen, insbesondere H, Cl oder CH₃ bedeutet, W² und W³ unabhängig voneinander H oder Alkyl mit 1 bis 5 C-Atomen, insbesondere Methyl, Ethyl oder n-Propyl bedeuten, W⁴, W⁵ und W⁶ unabhängig voneinander Cl, Oxaalkyl oder Oxacarbonylalkyl mit 1 bis 5 C-Atomen bedeuten, Phe 1,4-Phenylen bedeutet und k₁ und k₂ unabhängig voneinander 0 oder 1 bedeuten.

8. Reaktive mesogene Azulene nach mindestens einem der Ansprüche 1 bis 7, **dadurch gekennzeichnet, dass** sie ausgewählt sind aus den folgenden Formeln 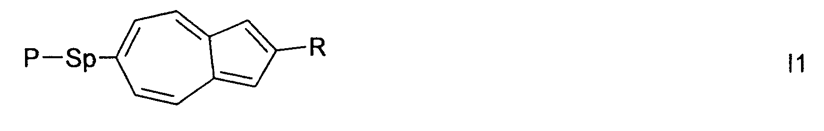 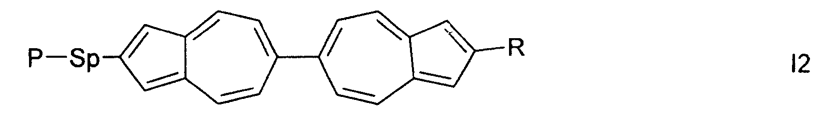 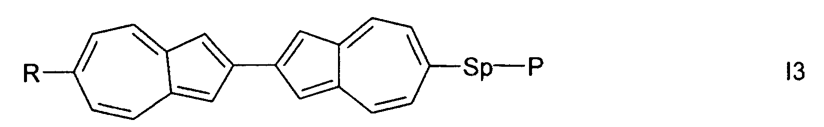 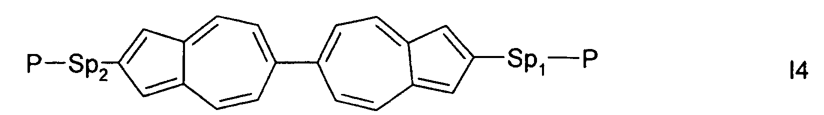 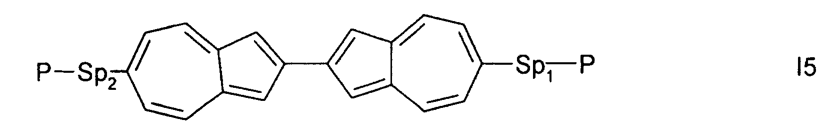 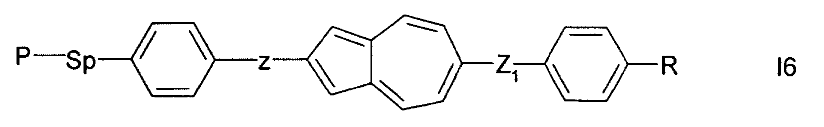 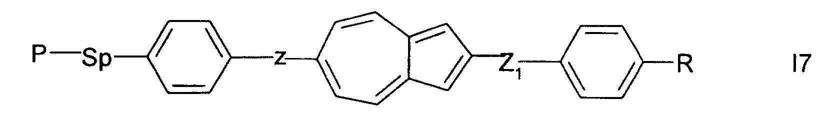 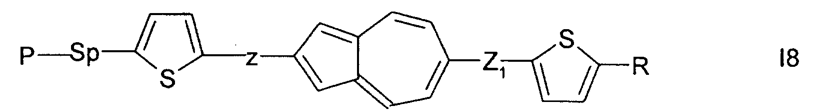 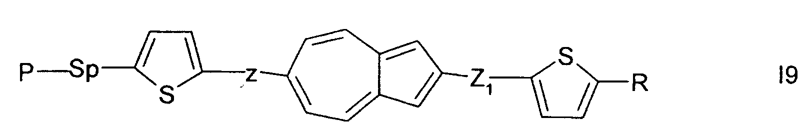 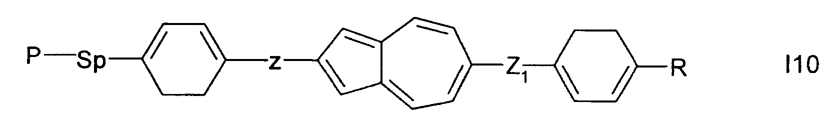 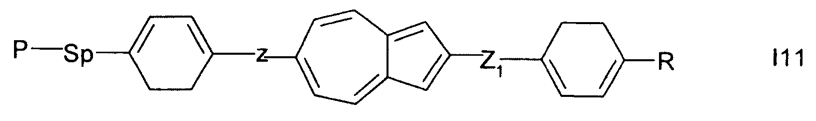 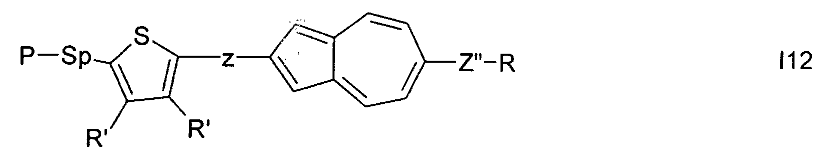 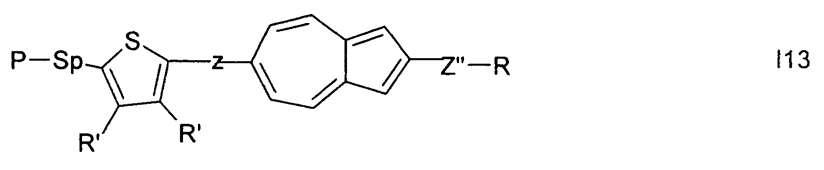 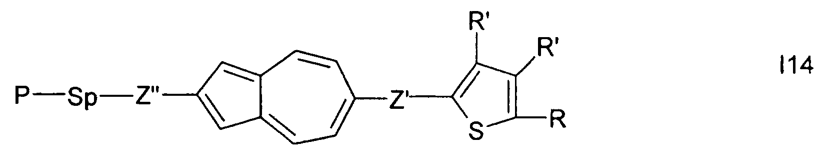 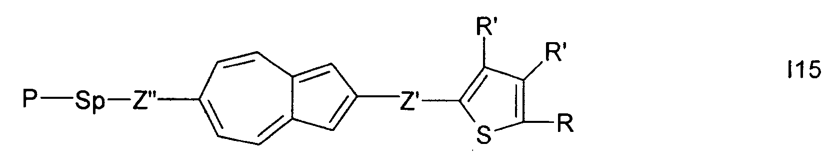 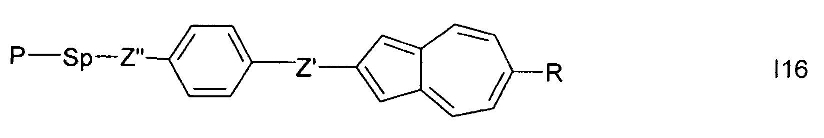 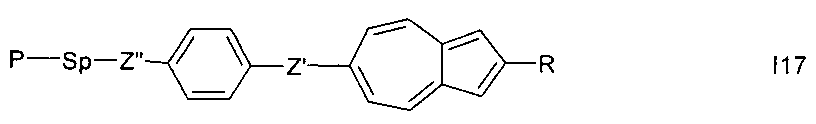 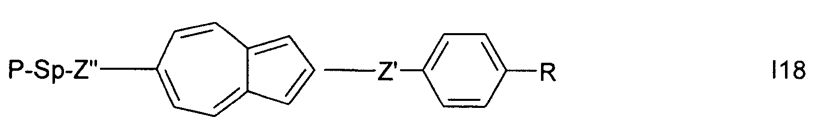 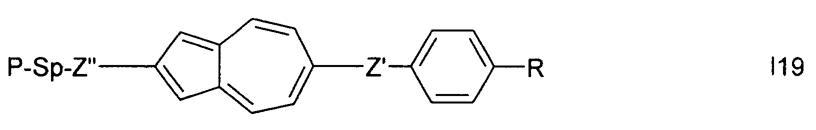 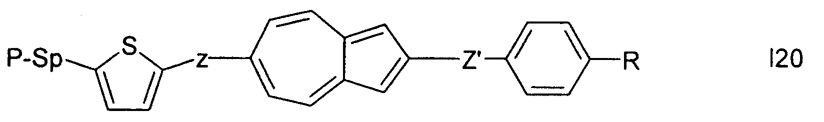 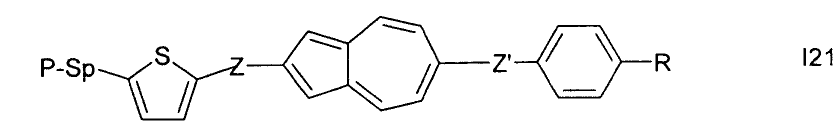 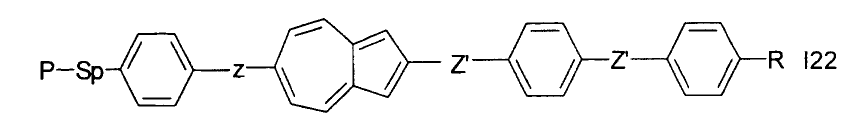 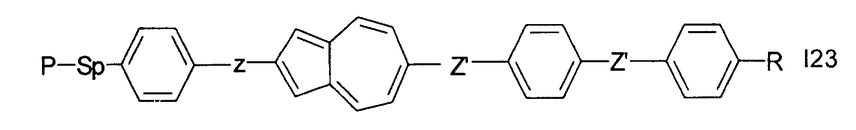 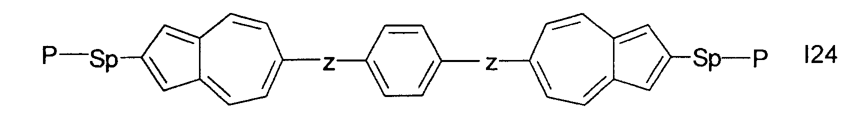 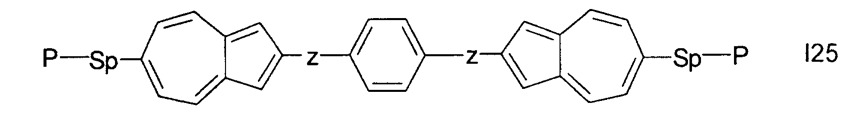 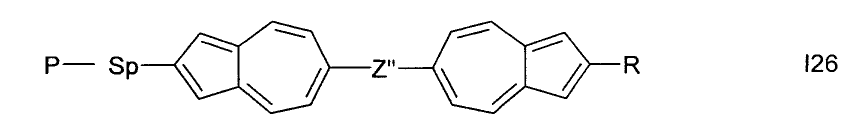 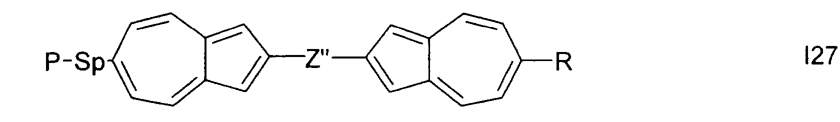 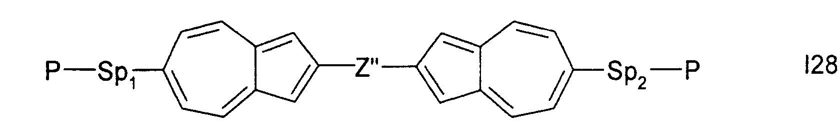 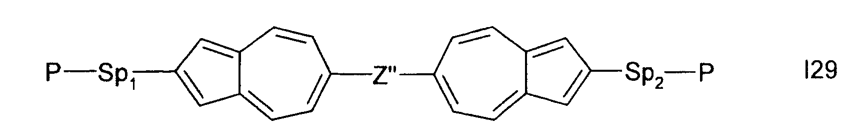 worin P, Sp und n die Bedeutungen der Formel I haben,
Sp¹ und Sp² unterschiedliche Gruppen Sp wie in Formel I definiert bedeuten,
Z und Z' unabhängig voneinander eine der Bedeutungen von Z¹ in Formel II besitzen und vorzugsweise -CH=CH-, -CH=CF-, -CF=CH-, CH=CCl-, -CCI=CH-, -CF=CF-, -CCI=CCI-, -C≡C- oder eine Einfachbindung bedeuten,
Z" eine der Bedeutungen von Z¹ in Formel II besitzt und vorzugsweise -CH=CH-, -CH=CF-, -CF=CH-, CH=CCl-, -CCl=CH-, -CF=CF-, -CCl=CCl- oder -C≡C- bedeutet,
R jeweils unabhängig eine der Bedeutungen von R¹ in Formel I besitzt,
R' jeweils unabhängig eine der Bedeutungen von R² in Formel II besitzt,
worin die Azulengruppe gegebenenfalls ein- oder mehrfach durch R² wie in Formel II definiert substituiert ist und worin in Formeln I6 bis I29 die Azulen-2,6-diylgruppen gegebenenfalls jeweils unabhängig durch [2,6']-Bisazulen-6,2'-diyl, [2,2']-Bisazulene-6,6'-diyl oder [6,6']-Bisazulen-2,2'-diyl ersetzt sein können, die alle jeweils gegebenenfalls ein- oder mehrfach durch R² wie in Formel II definiert substituiert sind.

9. Reaktive mesogene Azulene nach mindestens einem der Ansprüche 1 bis 8, **dadurch gekennzeichnet, dass** sie mesogen oder flüssigkristallin sind.

10. Reaktive Flüssigkristallmischung enthaltend ein oder mehrere reaktive mesogene Azulene nach mindestens einem der Ansprüche 1 bis 9 und gegebenenfalls eine oder mehrere weitere reaktive Verbindungen, worin mindestens eines der Azulene bzw. eine der weiteren reaktiven Verbindungen mesogen oder flüssigkristallin ist.

11. Anisotrope Polymerfolie mit ladungstransportierenden Eigenschaften, erhältlich aus einer reaktiven Flüssigkristallmischung nach Anspruch 10, die in ihrer Flüssigkristallphase in makroskopisch uniforme Ausrichtung orientiert und zur Fixierung des ausgerichteten Zustandes polymerisiert oder vernetzt ist.

12. Seitenketten-Flüssigkristallpolymer erhalten durch Polymerisation einer oder mehrerer Verbindungen oder eines polymerisierbaren Materials nach den Ansprüchen 1 bis 10 oder durch Aufpfropfen einer oder mehrerer Verbindungen oder eines polymerisierbaren Materials nach den Ansprüchen 1 bis 10 in einer polymeranalogen Reaktion auf ein Polymerrückgrat, gegebenenfalls mit einem oder mehreren zusätzlichen mesogenen oder nicht mesogenen Comonomeren.

13. Verwendung der reaktiven mesogenen Azulene, reaktiven Mischungen und Polymeren nach mindestens einem der Ansprüche 1 bis 12 als Halbleiter oder Ladungstransportmaterialien, insbesondere in optischen, elektrooptischen oder elektronischen Vorrichtungen, wie beispielsweise Komponenten integrierter Schaltungen, Feldeffekttransistoren (FET) z.B. als Dünnfilmtransistoren in Flachbildschirm-Anwendungen oder für RFID-Label (Radio Frequency Identification), oder in Halbleiterkomponenten für Anwendungen mit organischen Leuchtdioden (OLED) wie Elektrolumineszenzanzeigen oder Hintergrundlicht von z.B. Flüssigkristallanzeigen, für photovoltaische oder Sensorvorrichtungen, als Elektrodenmaterialien in Batterien, als Photoleiter und für elektrophotographische Anwendungen wie elektrophotographische Aufzeichnung, oder als lichtmodulierende Komponenten für Flüssigkristallanzeigen, optische Folien oder andere optische oder elektrooptische Vorrichtungen.

14. Feldeffekttransistor, beispielsweise als Komponente einer integrierten Schaltung, als Dünnfilmtransistor in Flachbildschirm-Anwendungen, oder in einem RFID-Label (Radio Frequency Identification), enthaltend ein oder mehrere reaktive mesogene Azulene, reaktive Mischungen oder Polymere nach mindestens einem der Ansprüche 1 bis 12.

15. Sicherheitsmarkierung oder -vorrichtung enthaltend ein oder mehrere reaktive mesogene Azulene, reaktive Mischungen oder Polymere nach mindestens einem der Ansprüche 1 bis 12, oder einen FET oder ein RFID-Tag nach Anspruch 14.

16. Reaktive mesogene Azulene, reaktive Mischungen oder Polymere nach mindestens einem der Ansprüche 1 bis 12, die oxidativ oder reduktiv dotiert sind, so dass sie leitende lonenspezies bilden.

17. Ladungsinjektionsschicht, Planarisierungsschicht, Antistatikfolie oder leitendes Substrat oder Muster für Elektronikanwendungen oder Flachbildschirme, enthaltend ein oder mehrere reaktive mesogene Azulene, reaktive Mischungen oder Polymerfolien nach Anspruch 16.

## Revendications

1. Azulènes mésogènes réactifs, constitués par un noyau mésogène central comprenant un ou plusieurs groupes azulène, et comprenant en option d'autres groupes organiques insaturés qui forment un système conjugué en association avec les groupes azulène, **caractérisés en ce que** ledit noyau mésogène est lié, en option via des groupes d'espaceurs, à un ou plusieurs groupes réactifs qui sont susceptibles de participer à une réaction de polymérisation ou qui sont susceptibles d'être greffés sur un squelette de polymère selon une réaction analogue à un polymère, où les groupes réactifs sont différents de groupes OH et ester, et les groupes azulène sont liés à leurs groupes voisins au niveau des positions 2 et 6.

2. Azulènes mésogènes réactifs selon la revendication 1, **caractérisés en ce qu'**ils sont choisis à partir de la formule I
P-Sp-T-R¹ I
où
P est un groupe polymérisable ou réactif,
Sp est un groupe ou une liaison simple,
R¹ est H, halogène, CN, NO₂, un groupe aliphatique, alicyclique ou aromatique avec jusqu'à 40 atomes de C qui comprend en option un ou plusieurs atomes hétéro et un ou plusieurs anneaux fusionnés, ou P-Sp-, et
T est un groupe mésogène qui comprend un ou plusieurs groupes azulène qui sont en option substitués et qui comprennent en option des groupes azulène fusionnés, moyennant la condition que des groupes azulène liés à leurs groupes voisins au niveau des positions 1 et 3 sont exclus.

3. Azulènes mésogènes réactifs selon la revendication 2, **caractérisés en ce que** T est choisi à partir de la formule II
-Z¹-(A¹-Z²)ₘ-(T¹-Z³)ₙ-(A²-Z⁴)ₒ- II
où
A¹ et A² sont, indépendamment l'un de l'autre, un groupe aromatique, hétéroaromatique avec jusqu'à 18 atomes de C qui est non substitué, mono- ou polysubstitué par R¹, et A¹ peut également représenter T¹,
Z¹ à Z⁴ sont, indépendamment les uns des autres -O-, -S-, -CO-, -COO-, -OCO-, -O-COO-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CX¹=CX²-, -C≡C-, -CH=CH-COO-, -OCO-CH=CH- ou une liaison simple,
X¹ et X² sont, indépendamment l'un de l'autre, H, F, Cl ou CN,
T¹ est un groupe qui est constitué par 1, 2, 3 ou 4 groupes azulène qui sont en option substitués par R²,
R² est H, halogène, CN, NO₂, un alkyle à chaîne droite, ramifié ou cyclique avec de 1 à 20 atomes de C, qui est non substitué, mono- ou polysubstitué par F, Cl, Br, I ou CN, où un ou plusieurs groupes CH₂ non adjacents sont en option remplacés dans chaque cas indépendamment les uns des autres par -O-, -S-, -NH-, -NR⁰-, -SiR⁰R⁰⁰-, -CO-, -COO-, -OCO-, -OCO-O-, -S-CO-, -CO-S-, -CH=CH- ou -C≡C- de telle sorte que des atomes de O et/ou de S ne soient pas liés directement les uns aux autres, ou représente un groupe aromatique ou hétéroaromatique ou P-Sp comme défini selon la formule I,
R⁰ et R⁰⁰ sont, indépendamment l'un de l'autre, H ou alkyle avec 1 à 12 atomes de C,
m et o sont, indépendamment l'un de l'autre, 0, 1, 2 ou 3, et
n est 1, 2 ou 3.

4. Azulènes mésogènes réactifs selon la revendication 3, caractérisés en ce queT¹ est choisi à partir des sous-formules qui suivent 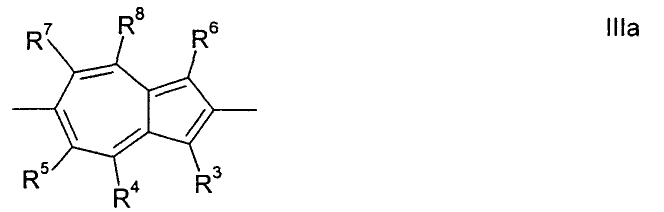 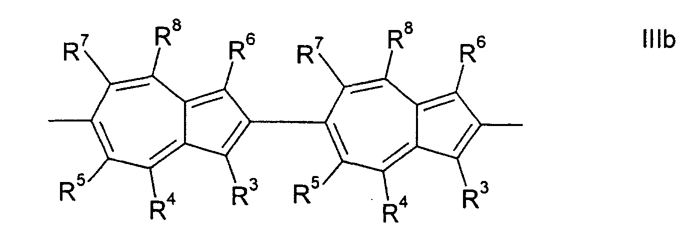 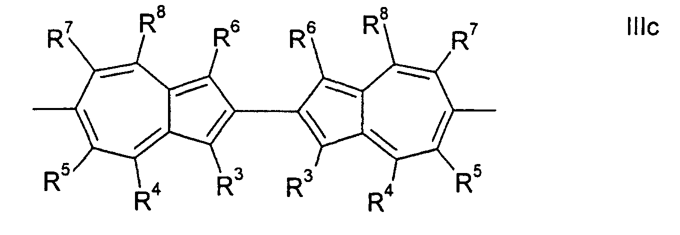 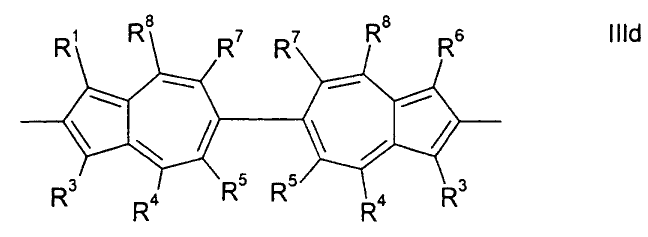 où R³ à R⁸ présentent, indépendamment les uns des autres, l'une des significations de R² dans la formule II.

5. Azulènes mésogènes réactifs selon la revendication 3 et/ou 4, **caractérisés en ce que** A¹ et A² sont choisis parmi 1,4-phénylène, 1,4-cyclohexa-1,3-diène, 1,4-cyclohexénylène où, en plus, un ou plusieurs groupes CH sont en option remplacés par N et un ou deux groupes CH₂ non adjacents sont en option remplacés par O et/ou S, thiophène-2,5-diyle, thiénothiophène-2,5-diyle, dithiénothiophène-2,6-diyle, 1,4-bicyclo-(2,2,2)-octylène, naphthalène-2,6-diyle, furane-2,5-diyle et indane-2,5-diyle, où ces groupes sont non substitués, mono- ou polysubstitués par L, L étant halogène, CN, SCN, NO₂, SF₅ ou un groupe alkyle, alkoxy, alkylcarbonyle ou alkoxycarbonyle avec de 1 à 4 atomes de C, où un ou plusieurs atomes de H sont en option substitués par F ou Cl.

6. Azulènes mésogènes réactifs selon au moins l'une des revendications 2 à 5, **caractérisés en ce que** R est H, F, Cl ou un alkyle à chaîne droite, ramifié ou cyclique avec de 1 à 20 atomes de C, qui est non substitué, mono- ou polysubstitué par F, CI, Br, I ou CN, où un ou plusieurs groupes CH₂ non adjacents sont en option remplacés dans chaque cas indépendamment les uns des autres par -O-, -S-, -NH-, -NR⁰-, -SiR⁰R⁰⁰-, -CO-, -COO-, -OCO-, -OCO-O-, -S-CO-, -CO-S-, -CH=CH- ou -C=C- de telle sorte que des atomes de O et/ou de S ne soient pas liés directement les uns aux autres, ou un groupe aromatique ou hétéroaromatique.

7. Azulènes mésogènes réactifs selon au moins l'une des revendications 1 à 6, **caractérisés en ce que** le groupe réactif ou le groupe T est choisi parmi CH₂=CW¹-COO-, 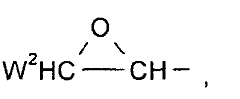 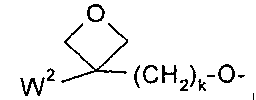 CH₂=CW²-(O)ₖ₁-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- et W⁴W⁵W⁶Si-, avec W¹ qui est H, Cl, CN, phényle ou alkyle avec de 1 à 5 atomes de C, en particulier H, Cl ou CH₃, W² et W³ étant indépendamment l'un de l'autre H ou alkyle avec de 1 à 5 atomes de C, en particulier méthyle, éthyle ou n-propyle, W⁴, W⁵ et W⁶ étant indépendamment les uns des autres Cl, oxaalkyle ou oxacarbonylalkyle avec de 1 à 5 atomes de C, Phe étant 1,4-phénylène et k₁ et k₂ étant indépendamment l'un de l'autre 0 ou 1.

8. Azulènes mésogènes réactifs selon au moins l'une des revendications 1 à 7, **caractérisés en ce qu'**ils sont choisis parmi les formules qui suivent 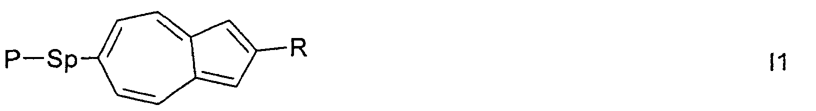 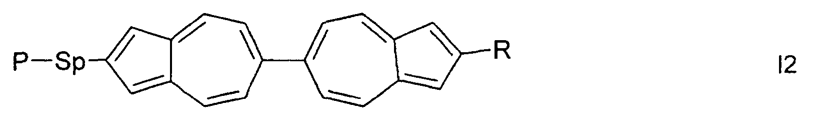 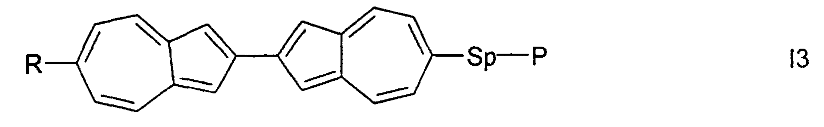 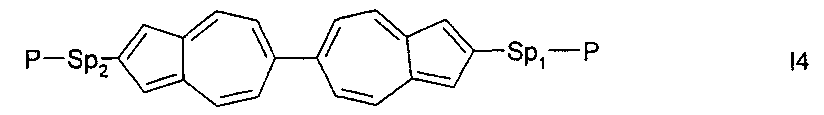 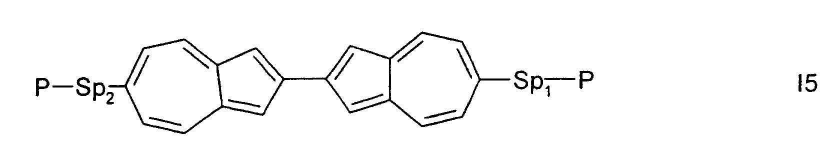 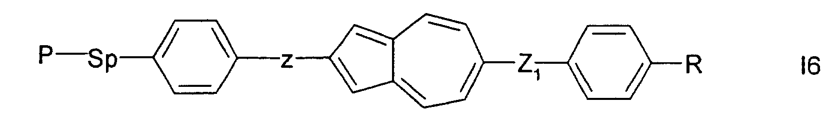 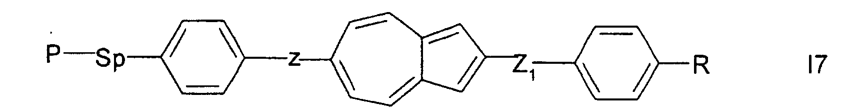 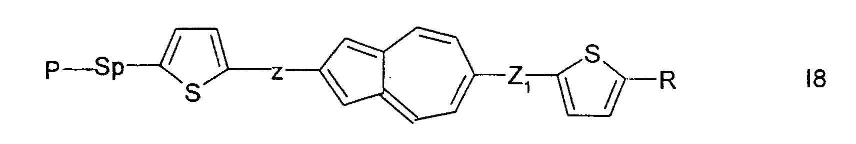 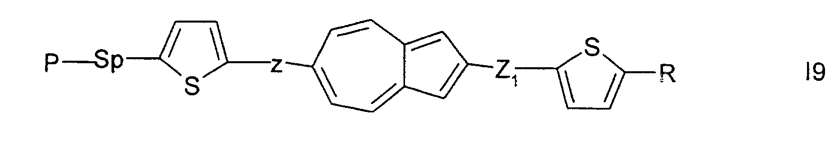 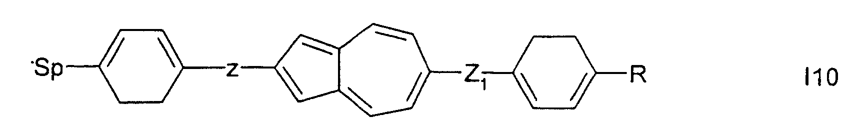 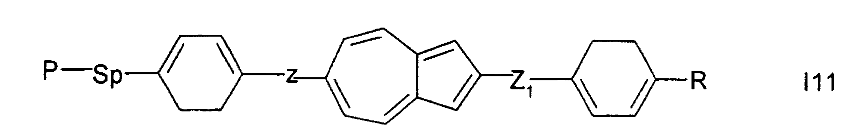 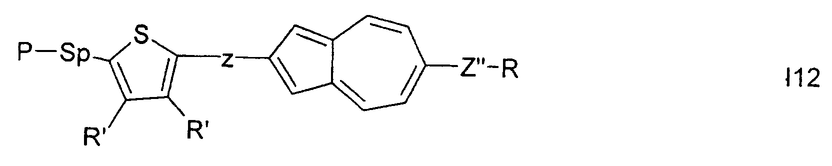 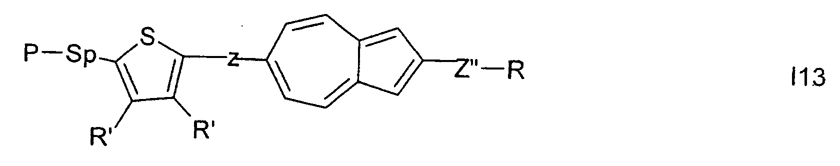 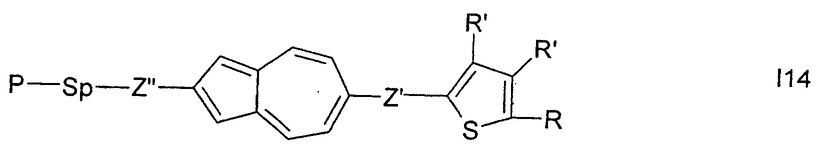 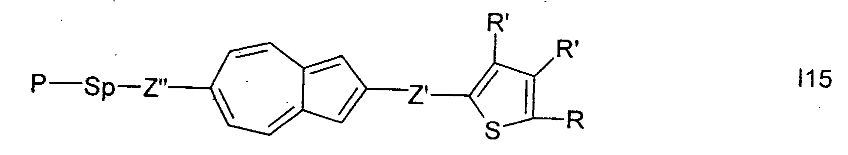 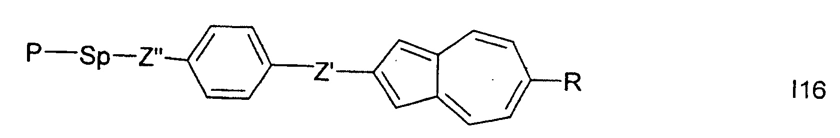 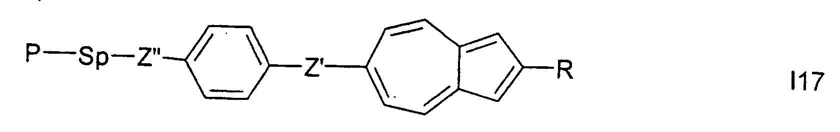 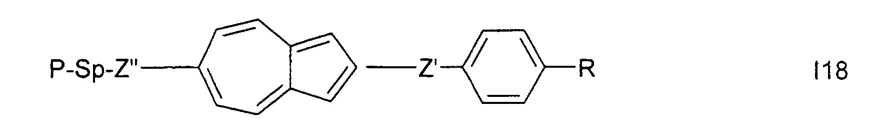 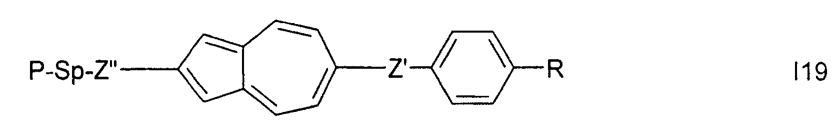 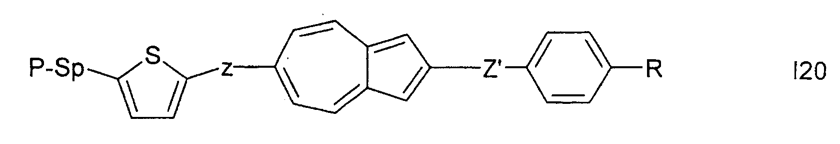 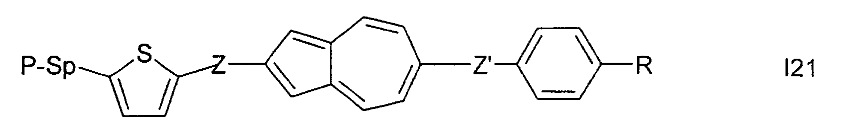 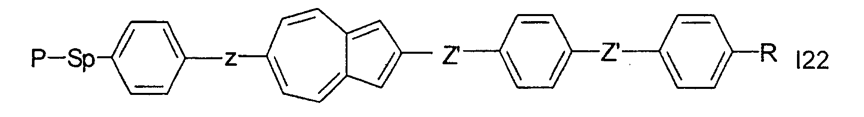 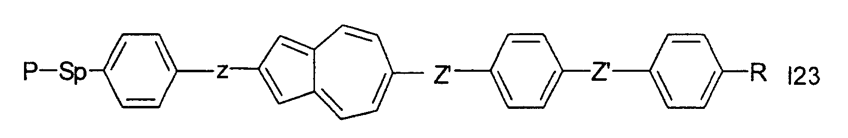 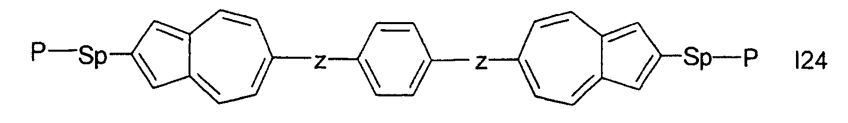 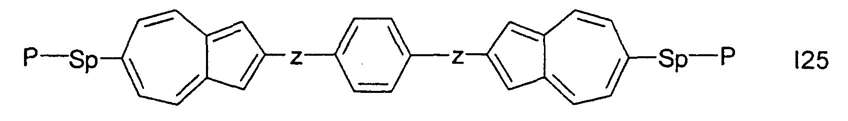 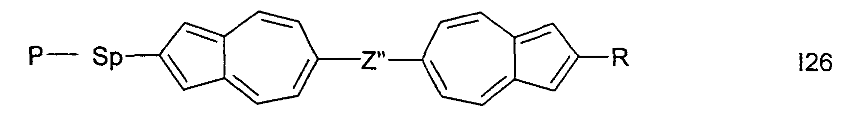 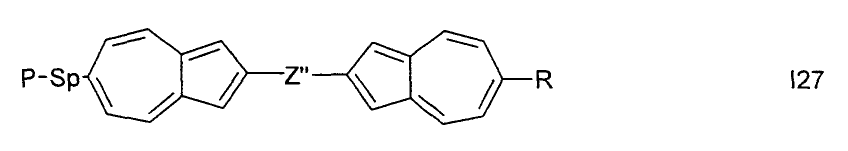 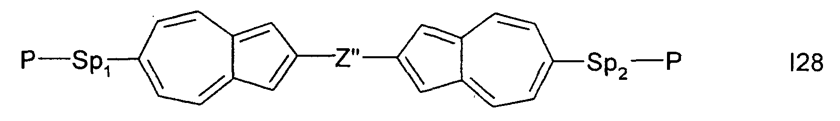 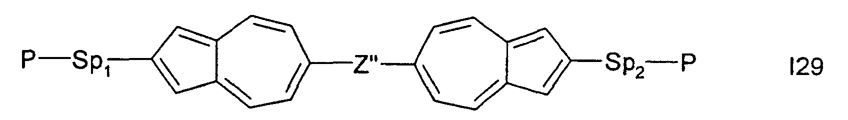 où P, Sp et nprésentent les significations de la formule I,
Sp₁ et Sp₂ sont des différents groupes Sp comme défini dans la formule I,
Z et Z' présentent, indépendamment l'un de l'autre les significations de Z¹ dans la formule II et sont de préférence -CH=CH-, -CH=CF-, -CF=CH-, CH=CCl-, -CCl=CH-, -CF=CF-, -CCl=CCl-, -C=C- ou une liaison simple,
Z" présente l'une des significations de Z¹ dans la formule II et est de préférence -CH=CH-, -CH=CF-, -CF=CH-, CH=CCI-, -CCI=CH-, -CF=CF-, -CCl=CCl- ou -C≡C-,
R présente dans chaque cas de manière indépendante l'une des significations de R¹ de la formule I,
R' présente dans chaque cas de manière indépendante l'une des significations de R² de la formule II,
dans lesquels le groupe azulène est en option mono- ou polysubstitué par R² comme défini selon la formule II et où, au niveau des formules I6 à I29, les groupes azulène-2,6-diyle sont en option remplacés, de manière indépendante pour chaque occurrence, par [2,6']-bisazulène-6,2'-diyle, [2,2']-bisazulène-6,6'-diyle ou [6,6']-bisazulène-2,2'-diyle, dont tous sont en option mono- ou polysubstitués par R² comme défini selon la formule II.

9. Azulènes mésogènes réactifs selon au moins l'une des revendications 1 à 8, **caractérisés en ce que** ce sont des cristaux mésogènes ou liquides.

10. Mélange de cristaux liquides réactifs comprenant un ou plusieurs azulènes mésogènes réactifs selon au moins l'une des revendications 1 à 9, et en option un ou plusieurs autres composés réactifs, où au moins l'un desdits azulènes et des autres composés réactifs est des cristaux mésogènes ou liquides.

11. Film en polymère anisotrope avec des propriétés de transport de charges pouvant être obtenu à partir d'un mélange de cristaux liquides réactifs selon la revendication 10 qui est aligné dans sa phase cristaux liquides selon une orientation uniforme macroscopiquement et qui est polymérisé ou réticulé pour fixer l'état orienté.

12. Polymère de cristaux liquides à chaîne latérale obtenu par polymérisation d'un ou de plusieurs composés ou d'un matériau polymérisable selon les revendications 1 à 10 ou en greffant un ou plusieurs composés ou un matériau polymérisable selon les revendications 1 à 10 sur un squelette de polymère au niveau d'une réaction analogue à un polymère en option avec un ou plusieurs co-monomères mésogènes ou non mésogènes additionnels.

13. Utilisation des azulènes mésogènes réactifs, des mélanges réactifs et des polymères selon au moins l'une des revendications 1 à 12, en tant que semiconducteurs ou que matériaux de transport de charges, en particulier dans des dispositifs optiques, électro-optiques ou électroniques, tels que par exemple des composants de circuits intégrés, des transistors à effet de champ (FET) par exemple en tant que transistors à film mince dans des applications d'affichage à écran plat ou pour des étiquettes d'identification radio fréquence (RFID), ou dans des composants de semiconduction pour des applications de diodes émettrices de lumière organiques (OLED) telles que des affichages électroluminescents ou des éclairages arrière de par exemple des affichages à cristaux liquides, pour des dispositifs photovoltaïques ou de capteur, en tant que matériaux d'électrode dans des accumulateurs, en tant que photoconducteurs et pour des applications électrophotographiques telles qu'un enregistrement électrophotographique, ou en tant que composants de modulation de lumière pour des affichages à cristaux liquides, des films optiques ou d'autres dispositifs optiques ou électro-optiques.

14. Transistor à effet de champ, par exemple en tant que composant d'un circuit intégré, en tant que transistor à film mince dans des applications d'affichage à écran plat ou dans une étiquette d'identification radio fréquence (RFID), comprenant un ou plusieurs azulènes mésogènes réactifs, mélanges réactifs ou polymères selon au moins l'une des revendications 1 à 12.

15. Marquage ou dispositif de sécurité comprenant un ou plusieurs azulènes mésogènes réactifs, mélanges réactifs ou polymères selon au moins l'une des revendications 1 à 12 ou un FET ou une étiquette RFID selon la revendication 14.

16. Azulènes mésogènes réactifs, mélanges réactifs ou polymères selon au moins l'une des revendications 1 à 12, qui sont dopés de façon oxydante ou réductrice pour former des espèces ioniques conductrices.

17. Couche d'injection de charges, couche de planarisation, film antistatique ou substrat ou motif conducteur pour des applications électroniques ou des affichages à écran plat, comprenant un ou plusieurs azulènes mésogènes réactifs, mélanges réactifs ou films de polymère selon la revendication 16.
